# EUROPÄISCHE PATENTSCHRIFT

(11) **EP 2 214 160 B1**
(45) Veröffentlichungstag und Bekanntmachung des Hinweises auf die Patenterteilung: **09.09.2015**
(21) Anmeldenummer: 10000681.6
(22) Anmeldetag: 25.01.2010
(51) Int. Cl.: G10K 11/162, G10K 11/165

(54) **Luftschallabsorptionsformteil und Verfahren zur Herstellung eines Luftschallabsorptionsformteils**
Airborne sound absorption moulded part and method for manufacturing same
Pièce moulée d'absorption du bruit aérien et procédé de fabrication d'une pièce moulée d'absorption du bruit aérien

(30) Priorität: 28.01.2009 DE 102009006380
(43) Veröffentlichungstag der Anmeldung: 04.08.2010
(73) Patentinhaber: Johann Borgers GmbH, 46397 Bocholt (DE)
(72) Erfinder: Jeckle, Erich, 86476 Halbertshofen (DE); Koehnsen, Richard, 75433 Maulbronn (DE)
(74) Vertreter: Geitz Truckenmüller Lucht

(56) Entgegenhaltungen:
- EP-A1- 1 270 787
- DE-A1- 19 720 537
- DE-B3-102006 005 369
- JP-A- H01 314 771
- US-A1- 2003 124 940
- US-A1- 2006 254 855

## Beschreibung

Die Erfindung betrifft ein Luftschallabsorptionsformteil gemäß dem Oberbegriff des Anspruches 1 und ein Verfahren zur Herstellung eines Luftschallabsorptionsformteils gemäß dem Oberbegriff des Anspruches 33.

Derartige Luftschallabsorptionsformteile und Verfahren zu deren Herstellung sind allgemein bekannt geworden.

Aus der DE 197 20 537 A1 ist eine Verkleidung von Einbauteilen, Karosserieteilen oder dergleichen von Automobilen, hitzeabstrahlenden Maschinen und Aggregaten, insbesondere von schallabsorbierenden Elementen zum Schutz gegen zu hohe Wärmebelastung durch Maschinenteile, Abgasführungen, Katalysatorteile oder dergleichen, bekannt geworden. Die Verkleidung umfasst eine gegebenenfalls perforierte Metallfolie, die aus einem Schichtaufbau der Reihenfolge nach von der Wärmequelle ausgehend wie folgt besteht:
a) Textiles Gebilde aus anorganischer Glasfaser, Mineralsilikatfaser, Keramikfaser und/oder Kohlenstoff-Faser,
b) partielle oder vollflächige Mineralwolledämmschicht im Bereich erhöhter Wärmebelastung,
c) partielle oder vollflächige Metallfolie im Bereich erhöhter Wärmebelastung,
d) duroplastisch gebundenes Textilfaservlies und gegebenenfalls
e) Deckvlies zum Schutz vor mechanischen Beschädigungen.

Ein derartiger Schichtaufbau ist für Schallwellen zumindest teilweise durchlässig, so dass darunter befindliche Schallabsorber in Form von duroplastisch gebundenen Textilfaservliesen, beispielsweise Baumwollfaservliesen, akustisch wirksam bleiben. Bei den duroplastisch gebundenen Textilfaservliesen kann es sich um ein Phenolharz gebundenes Textilfaservlies handeln. Dieses kann als sogenanntes "Porenkomposit" aus drei Fasen bestehen, nämlich aus Baumwolle, gehärtetem Phenolharz und Luft. Besonders bevorzugte Materialien zur Herstellung des Vliesstoffes sind glasfaserverstärkte oder glasgitterverstärkte Fasermaterialien, insbesondere duroplastische oder thermoplastische Bindemittel enthaltende Textilvliese, vorzugsweise solche, die aus einem Baumwollmischgewebe bestehen. Diese Vliese werden durch Pressen bei erhöhter Temperatur auf die gewünschte Festigkeit gebracht. Derartige Textilfaservliese müssen auf einem ausreichend eigensteifen bzw. eigenstabilen Trägermaterial aufgebracht werden.

Aus der DE 195 00 725 C2 ist ein, insbesondere zur Anwendung im Motorraum von Kraftfahrzeugen anwendbarer, schallabsorbierender und wärmedämmender Formkörper bekannt geworden, der ein im Wesentlichen vollständig von einer Folie umhülltes bzw. abgedecktes Vlies aus thermoplastischem Material aufweist. Dieser Formkörper muss ebenfalls auf einem ausreichend eigensteifen bzw. eigenstabilen Trägermaterial befestigt werden. Die aus einem einen porösen Absorber ausbildenden Vlies aus thermoplastischen Polyesterfasern und aus einer Polyesterfolie gebildete Absorber-Verbundeinheit ist mit einem Träger verbunden, der bevorzugt aus GMT, d. h. glasmattenverstärktem thermoplastischen Material, und/oder SMC, d. h. "Sheet Molding Compound", besteht. Im Bereich eines Randes des Absorber-Verbundkörpers kann das Polyestervlies zusammen mit der das Vlies umgebenden Polyesterfolie auf eine geringe Wandstärke, beispielsweise mit Hilfe von Heißsiegelbacken, zusammengepresst werden, wodurch eine Verschmelzung des thermoplastischen Materials sowohl der Fasern des Vlieses als auch der Folie erfolgt. Ein derart hergestellter Rand kann rahmenförmig um den Absorber umlaufen, wodurch die Stabilität desselben begünstigt wird, obwohl der sich innerhalb des Rahmens befindliche Bauteil flexibel ist und gute schallabsorbierende Wirkungen hat. Zusätzlich kann vorgesehen sein, dass die schallabsorbierende Einheit durch ein bereichsweises Vermindern der Dicke des Vlieses durch partielles Verpressen so lokal verdichtet wird, dass Hohlräume zwischen dem Vlies und der Abdeckfolie einerseits und Hohlräume zwischen der Einheit und dem Trägermaterial andererseits gebildet sind. Hierdurch besteht die Möglichkeit, durch unterschiedliche Absorberdicken und unterschiedliche Hohlraumbemessungen gezielte Schallsabsorptionen je nach Frequenzbereich zu erzeugen. Derartige Verbundeinheiten stellen also eine Doppelfunktion sowohl als "poröser Absorber" als auch als "Kammerabsorber" sicher. Das bindemittelfreie bereichsweise Verpressen der sich auf einem Träger bzw. Trägermaterial abzustützenden Absorbereinheit ist aufwändig und teuer.

Aus der DE 32 17 784 A1 ist ein schalldämmendes Element bekannt geworden, das aus einer durchgehenden dünnen Platte besteht, die mit einem gitterförmigen Rahmen kraftschlüssig verbunden und/oder mit netzförmigen Versteifungen oder Steifigkeitsverringerungen versehen ist derart, dass eine Vielzahl von unabhängig schwingungsfähigen Resonatoren entsteht. Der Rahmen und/oder die Versteifungen oder Steifigkeitsverringerungen weisen in einer oder mehreren jeweils übergeordneten Gitter- bzw. Netzstruktur(en) unterschiedliche Steifigkeiten auf, wodurch Resonatorkollektive mit gegenüber einem einzelnen Resonator geringerer Resonanzfrequenz entstehen. Durch die erfindungsgemäß vorgesehenen übergeordneten Gitter- bzw. Netzstrukturen wird erreicht, dass nicht nur die einzelnen Platten in ihrer Resonanzfrequenz schwingen, sondern auch mehrere Platten zusammen als Kollektiv bei einer entsprechend geringen Resonanzfrequenz. Die einzelnen Platten werden daher in mehreren Frequenzen hinsichtlich ihrer schallabsorbierenden Wirkung ausgenutzt, so dass die Gesamtzahl der Platten zur Bedämpfung eines vorgegebenen Frequenzbereiches um ein Mehrfaches kleiner sein kann als bisher. Da die Resonanzfrequenz eines Resonatorkollektivs kleiner als die eines einzelnen Resonators ist, wird zudem eine wirksame Entkopplung beider Schwingungssysteme erreicht. Die Resonatoren können durch beiderseitiges Sandstrahlen der Platten hergestellt werden, wodurch die bearbeiteten Flächenteile weicher und damit tieffrequenter werden. Die nicht bearbeiteten Plattenteile bilden daher die steiferen Rahmenteile. Die Platte kann auch Wellungen aufweisen, durch welche einzelne Resonatoren voneinander getrennt sind. Die Platte kann auch aus zwei Teilplatten bestehen, zwischen denen ein Gitter bildende Stege eingeklemmt sind. Die beiden Teilplatten sind zusammengepresst und miteinander verklebt, so dass die Bereiche zwischen den Stegen schwingungsfähige Einzelresonatoren bilden können. Ferner kann die Platte auch aus zwei Teilplatten hergestellt sein, von denen jede in regelmäßigen Abständen kalottenförmige Einprägungen bzw. Vertiefungen aufweist. Die beiden Teilplatten werden so unter Druck zusammengeklebt, dass sich die Vertiefungen entweder mit den konkaven oder mit den konvexen Seiten gegenüber liegen, wodurch eine nicht lineare Federcharakteristik vergleichbar mit einer Tellerfeder erreichbar ist. Damit eine derartige Platte durch Luftschall zu Eigenschwingungen angeregt wird, ist eine inkoharänte Druckbeaufschlagung der Platte von beiden Seiten erforderlich. Dazu muss die Platte am Rand in einen Rahmen fest eingespannt werden. Der Rahmen ist mit einer starren Abschlusswand versehen, so dass ein mit Luft gefüllter Hohlraum zwischen der Platte und dieser Abschlusswand entsteht. Die eingeschlossene Luft wirkt dann wie eine einfache Feder auf die Rückseite der Platte. Die Herstellung derartiger schalldämmender Elemente mit einer dünnen Platte mit einer Vielzahl von unabhängig schwingungsfähigen Resonatoren ist aufwändig und teuer.

Aus der US 2003/0124940 A1 sind Auskleidungen aus einem Composite-Material aus einer Fasermischung bekannt geworden, die aus Mineralfasern, wie Glasfasern, und aus organischen Fasern, wie Polypropylen-Fasern besteht. Dieses Composite-Material kann zu einer Schicht oder zu einem Substrat geformt und selektiv verpresst werden, um Variationen sowohl der Kontur als auch der Dicke der Auskleidungen zu erhalten. Indem Bereiche oder Flächen der Auskleidung geschaffen werden, die selektiv gelockert ("lofted") oder zusammengepresst sind, kann die Dämpfung von unerwünschter Schallenergie entsprechend kontrolliert werden. Diese Auskleidungen erfordern also zwingend die Verwendung von Mischungen aus Mineralfasern und organischen Fasern, insbesondere thermoplastischen Fasern. Derartige Fasermischungen sind aufwendig in der Herstellung und entsprechend teuer. Ausgehend von diesen Fasermischungen werden aufgelockerte ("lofted") Mischfasermatten hergestellt, die mittels einer Heizung erwärmt und moderat vorkompaktiert werden, die also noch immer zu einem gewissen Grad aufgelockert ("lofted") sind. Die vorkompaktierten Mischfasermatten werden entweder in erster Wärme oder nach Abkühlen und erneutem Aufheizen in kalten Werkzeugen zu Auskleidungen geformt bzw. verpresst. Dabei werden die Faser-Mischungen selektiv, d.h. an bestimmten Stellen, durch Verformen der vorkompaktierten Mischfasermatte im Wesentlichen nur auf einer Seite, also nur von einer Seite her, zusammengepresst, so dass die nicht oder nur wenig kompaktierten Bereiche der vorkompaktierten Mischfasermatte nur auf einer Seite der Auskleidung über die Oberfläche der angrenzenden, stärker bzw. stark kompaktierten Bereiche hochstehen. Die Eigensteifigkeit derartiger Auskleidungen ist begrenzt.

Aus der EP 1 270 787 A1 sind Verfahren zur Herstellung von dreidimensionalen netzartigen Strukturen bekannt geworden, die aus einer Vielzahl von spiralförmig und zufällig verwickelten bzw. verschränkten thermoplastischen Filamenten hergestellt werden, die teilweise thermisch aneinander gebunden ("bonded") sind. Die thermoplastischen Filamente werden mittels eines Extruders aus einer thermoplastischen Schmelze hergestellt. Eine Düsenplatte des Extruders weist eine Vielzahl von Düsenöffnungen auf, die homogen oder inhomogen über der Fläche der Düsenplatte verteilt angeordnet sein können. Dies beispielsweise derart, dass die Düsenöffnungen eine rechteckige Anordnung ausbilden, wobei in rahmenartigen Außenrandbereichen der Anordnung die Düsenöffnungen eng beieinanderliegend angeordnet sind, während die Düsenöffnungen innerhalb dieser rahmenartigen Außenrandbereiche einen größeren Abstand zueinander aufweisen. Dabei können auch zwischen zwei beabstandet parallel zueinander verlaufenden Außenrandbereichen mit eng beieinander liegenden Düsenöffnungen ein oder mehrere stegartig ausgebildeten Zentralbereiche vorgesehen sein, in denen die Düsenöffnungen ebenfalls eng beieinanderliegend angeordnet sein können. Mit derart gestalteten Düsenplatten können dreidimensionale netzartige Strukturen aus einer der Anzahl von Düsenöffnungen entsprechenden Anzahl von Filamenten erzeugt werden, die spiralförmig und zufällig verwickelt sind. Dazu werden die Filamente, die nach ihrem Austreten aus den Düsenöffnungen der Düsenplatte schwerkraftbedingt vertikal nach unten gelenkt werden, entweder zwischen zwei vertikal beabstandeten, jeweils horizontale Endlosförderflächen aufweisenden Endlosförderen und zwei horizontal beabstandeten Rollen mit vertikalen Rollenförderflächen, die jeweils senkrecht zu den horizontalen Endlosförderflächen angeordnet sind oder zwischen vier Endlosförderen, deren Endlosförderflächen jeweils in einem rechten Winkel zueinander angeordnet sind, derart geformt, dass in einem Querschnitt senkrecht zur Förderrichtung betrachtet drei oder vier Randseiten der dreidimensionalen Struktur zwischen den Förderflächen kompaktiert werden. Die dadurch gebildete dreidimensionale Struktur weist an drei oder vier Randseiten eine verdichtete Filamentstruktur auf, während im Inneren der Filamentstruktur unverformte bzw. weniger verformte zentrale Filamentbereiche bestehen bleiben. Die aus solchen dreidimensionalen Filamentstrukturen hergestellten Formteile weisen eine vergleichsweise geringe Eigensteifigkeit auf. Die Herstellung ist aufwendig und kostenintensiv, so dass auch die Formteile vergleichsweise teuer sind.

Ein ähnliches Verfahren zur Herstellung von dreidimensionalen Filamentstrukturen ist aus der JP H01 314771 A bekannt geworden. Auch dabei werden thermoplastische Monofilamente hergestellt, die jedoch aus den Düsen unmittelbar auf ein einziges mit einer Vielzahl von Erhebungen versehenes, sich in einer Förderrichtung bewegendes Förderband frei abgelegt werden. Auch hier ist eine Düsenplatte eingesetzt, bei welcher die Düsenöffnungen inhomogen über die Plattenfläche verteilt sind, und zwar derart, dass mehrere bandförmig ausgebildeten und rechteckförmig begrenzten Düsenöffnungsanordnungen nebeneinander vorgesehen sind. Die Düsenöffnungen jeweils unmittelbar benachbarter Düsenöffnungsanordnungen sind jeweils homogen, aber in unterschiedlichen Abständen angeordnet. Auf diese Weise ergeben sich auf dem Förderband mehrere in Förderrichtung parallel verlaufende, lineare, unterschiedlich dichte Zonen von Monofilamenten. Zwischen jeweils zwei linearen Zonen mit einer geringen Filamentdichte ist eine lineare Zwischenzone ausgebildet. In der Zwischenzone sind die Monofilamente dichter angeordnet als in den beiden unmittelbar benachbarten linearen Zonen, in denen die Monofilamente lockerer bzw. grob strukturiert angeordnet sind. Die Eigensteifigkeit dieser linear strukturierten dreidimensionalen Monofilamentgebilde bzw. der daraus gebildeten Formteile ist vergleichsweise gering.

Der Erfindung liegt die Aufgabe zugrunde, ein Luftschallabsorptionsformteil zur Verfügung zu stellen, das kostengünstig und einfach herstellbar ist, das ein geringeres Gewicht und eine vergleichsweise große Eigensteifigkeit aufweist und bei dessen Herstellung vorteilhafte Möglichkeiten zur lokalen bzw. bereichsweisen Veränderung der akustischen Wirksamkeit und/oder der mechanischen Eigenschaften bestehen.

Diese Aufgabe wird durch die Merkmale der unabhängigen Ansprüche 1 und 10 gelöst.

Erfindungsgemäß ist bei dem eingangs erwähnten Luftschallabsorptionsformteil vorgesehen, dass die Faserschicht des Faserschichtverbunds unterschiedlich stark verdichtete und verfestigte Bereiche aus gitter- bzw. netzartige oder als Gitter bzw. Netz gestaltete Versteifungsstrukturen ausbildenden, aus durch Verformen verdichtetem und verfestigtem Fasermaterial bestehenden Versteifüngsstegen und aus mehreren, von den Versteifungsstegen wenigstens teilweise, vorzugsweise vollumfänglich, begrenzten bzw. umschlossenen bzw. umgriffenen luftschallabsorbierenden Kissen aus dem nicht oder weniger stark verdichteten Fasermaterial aufweist, wobei die Kissen auf beiden Seiten des Luftschallabsorptionsteils über die Oberfläche der Versteifungsstege hoch stehen.

Das Formteil wird also hergestellt, indem das Halbzeug aus Fasermaterial bzw. die Faserschicht derart verarbeitet wird, dass es verschieden stark verdichtete und/oder verschieden stark verfestigte Bereiche gibt. Die stärker verdichteten bzw. verfestigten Bereiche sorgen für eine ausreichende Eigensteifigkeit bzw. Eigenstabilität. Die nicht oder weniger stark verdichteten bzw. weicheren Bereiche bilden die akustisch wirksamen bzw. wirksameren Bereiche. Durch die erfindungsgemäßen Maßnahmen erhält man also ein eigensteifes, selbsttragendes Luftschallabsorptionsformteil. Die Konstruktion eines derartigen Formteils in der Außengeometrie wie auch in der Konstruktion bzw. Ausgestaltung der gitter- bzw. netzartigen Versteifungsstrukturen, die sich auch in mehreren Ebenen innerhalb des Formteils befinden können, wie auch die Konstruktion bzw. Ausgestaltung der Kissen sind wichtig für die Eigensteifigkeit bzw. Eigenstabilität des erfindungsgemäßen Formteils.

Das erfindungsgemäße Luftschallabsorptionsformteil zeichnet sich dadurch aus, dass sowohl die Funktion der akustischen Wirksamkeit als auch die Funktion der mechanischen Festigkeit und Eigensteifigkeit bzw. Eigenstabilität von demselben Material, d. h. von der Faserschicht aus Fasermaterial, erfüllt wird, welches bzw. welche bereichsweise lediglich unterschiedlich im Fertigungsverfahren behandelt wurde. Durch die erfindungsgemäßen Maßnahmen wird ein Luftschallabsorptionsformteil geschaffen, das leichter und vor allem kostengünstiger als bisher ist. Die Akustik ist in gewissen Grenzen durch eine Dimensionierung des Kissens bzw. der Kissen "designbar". Die Festigkeit und Eigensteifigkeit bzw. Eigenstabilität des Luftschallabsorptionsformteils kann ebenfalls vergleichsweise einfach unterschiedlich entsprechend den örtlichen und/oder funktionellen Anforderungen im Anwendungs- bzw. Einbaubereich eingestellt werden. Das Halbzeug bzw. die Faserschicht ist gleich bzw. gleich gut verarbeitbar, jedoch sind die Herstellungszeiten kürzer. Ein derartiges Luftschallabsorptionsformteil kann auch besser bzw. einfacher als bisher recycelt werden. Möglichkeiten zur Erhöhung der Steifigkeit des selbsttragenden Luftschallabsorptionsformteils, also ohne den Einsatz von Trägermaterialien bzw. Trägern, insbesondere von SMC-Trägern, können durch Modifizierung des Bindemittels, Armierung des Halbzeuges bzw. der Faserschicht, Erhöhung des Verdichtungsgrades der Versteifungsstege bzw. der diese enthaltenden Versteifungsstrukturen, durch konstruktive Gestaltung der Kissengröße und Kissengeometrie und/oder durch konstruktive Gestaltung des Luftschallabsorptionsformteils hinsichtlich dessen Außengeometrie, beispielsweise in Form einer Bördelung oder Versickung, Sicken, Nuten und/oder anderen geometrischen Strukturen erreicht werden.

Demgemäß kann in besonders bevorzugter konstruktiver Ausgestaltung vorgesehen sein, dass die sich kreuzenden bzw. ineinander übergehenden Versteifungsstege sich über einen mehrere Kissen enthaltenden Flächenbereich des Luftschallabsorptionsformteils, vorzugsweise über die gesamte Breite und/oder Tiefe des Luftschallabsorptionsformteils, ununterbrochen durchgehend entlang der Kissen erstrecken. Dadurch kann die Eigensteifigkeit in besonderem Maße angehoben werden und ein derartiges Luftschallabsorptionsformteil kann besonders einfach und kostengünstig hergestellt werden.

Ferner kann vorgesehen sein, dass die Kissen jeweils mit mehreckigen, insbesondere viereckigen, vorzugsweise quadratischen und/oder rechteckigen Versteifungsstrukturen und/oder mit ovalen und/oder mit kreisförmigen Versteifungsstrukturen begrenzt bzw. umschlossen bzw. umgriffen sind. Durch eine geeignete Auswahl derartiger Kissengeometrien und demgemäß der diese jeweils begrenzenden Versteifungsstrukturen lässt sich in flexibler Art und Weise ein an die jeweiligen Anforderungen hinsichtlich der akustischen Wirksamkeit und der Stabilität optimal angepasstes Luftschallabsorptionsformteil verwirklichen.

Wenn die Kissen durch quadratische Versteifungsstrukturen bzw. durch quadratisch angeordnete Versteifungsstege begrenzt bzw. umschlossen bzw. umgriffen sind, können die Kissen und/oder können die Versteifungsstege jeweils eine Kantenlänge aufweisen, die etwa 5 x 5 mm bis 2.500 x 2.500 mm, vorzugsweise etwa 5 x 5 mm bis 250 x 250 mm, betragen kann. Ferner kann vorgesehen sein, dass die mit quadratischen Versteifungsstrukturen begrenzten Kissen und/oder die Versteifungsstege jeweils eine Kantenlänge aufweisen, die etwa 5 x 5 mm bis 2.500 x 2.500 mm, vorzugsweise etwa 5 x 5 mm bis 250 x 250 mm, beträgt. Ferner kann vorgesehen sein, dass die Kissen eine durch die Versteifungsstrukturen begrenzte Querschnittsfläche aufweisen und/oder dass die die Kissen begrenzenden Versteifungsstrukturen bzw. Versteifungsstege eine Querschnittsfläche umschließen, die etwa 25 mm² bis 6.250.000 mm², vorzugsweise etwa 25 mm² bis 62.500 mm², beträgt. Innerhalb der vorstehend bezeichneten Grenzen lassen sich anwendungsspezifisch optimale Bereiche hinsichtlich der akustischen Wirksamkeit einerseits und hinsichtlich der mechanischen Stabilität des Luftschallabsorptionsformteils andererseits realisieren.

Ferner kann vorgesehen sein, dass die Versteifungsstege der Versteifungsstrukturen, insbesondere zwischen benachbarten Kissen, eine Stegbreite von etwa 1 bis 400 mm, vorzugsweise von etwa 5 bis 100 mm, aufweisen. Alternativ oder zusätzlich kann vorgesehen sein, dass die Versteifungsstege der Versteifungsstrukturen, insbesondere zwischen benachbarten Kissen, eine im Wesentlichen konstante Stegbreite aufweisen. Durch die vorgenannten Maßnahmen lässt sich insbesondere die Eigenstabilität des Luftschallabsorptionsformteils vorteilhaft einstellen, wobei stets ein selbsttragendes Luftschallabsorptionsformteil verwirklichbar ist.

Ferner kann vorgesehen sein, dass die Versteifungsstrukturen derart ausgebildet sind, dass die durch diese begrenzten Kissen eine unterschiedliche Form und/oder Größe aufweisen.

Wie bereits vorstehend erwähnt, kann die Steifigkeit der, vorzugsweise in Form eines Halbzeuges zu verarbeitenden, Faserschicht und demgemäß die Steifigkeit des Luftschallabsorptionsformteils durch eine geeignete Armierung bzw. Verstärkung erhöht werden. Bevorzugt kann die Faserschicht mit Jute-, Bast-, Hanf-, Glas- und/oder Kunststofffasern oder -gewirken verstärkt bzw. armiert sein.

Vorzugsweise kann die mit dem Bindemittel versetzte Faserschicht ein Flächengewicht von 0,5 bis 10 kg/m² aufweisen. Ferner kann in besonders bevorzugter Ausgestaltung die Faserschicht bzw. das Fasermaterial aus oder mit Baumwolle, insbesondere aus Reißbaumwolle, vorzugsweise aus oder mit Baumwollmischgewebe gebildet sein.

Baumwolle ist ein derzeit bevorzugtes Absorbermaterial. Grundsätzlich ist jedoch jedes Material denkbar, welches sich als Faser darstellt und welches sich mit einem Binder zu formstabilen Formteilen fertigen lässt.

Es versteht sich, dass die Faserschicht bzw. das Fasermaterial alternativ oder zusätzlich aus oder mit Glaswolle und/oder aus oder mit Mineralwolle, insbesondere biolöslicher Mineralwolle, beispielsweise Biosil®, gebildet bzw. bestehen kann, die mit Bindemittel bzw. mit Bindemitteln versehen sein kann bzw. können.

Ein derartiges Baumwollmischfaservlies besteht bevorzugt vornehmlich aus Jeans-Recyclat, das wiederum im Wesentlichen aus Baumwolle besteht. Die Baumwolle bzw. allgemein das Fasermaterial wird mit Bindemittel versetzt, welches im Fertigungsprozess aushärtet, wodurch eine erhöhte Eigensteifigkeit des Luftschallabsorptionsformteils erreicht wird. Je nach Kundenanforderung können weitere Zusätze zugegeben werden, beispielsweise Flammschutzmittel, Oleophobierungs- und/oder Hydrophobierungsmittel.

Es versteht sich, dass das Fasermaterial bzw. die Fasern mit Flammschutzmitteln versetzt sein können. Bevorzugt können Flammschutzmittel auf Phosphatbasis eingesetzt werden. Es versteht sich jedoch, dass die Flammschutzmittel auch auf der Basis von Stickstoff (Melamin und/oder Harnstoff) ausgewählt sein können und/oder halogeniert sein können. Ferner können die Flammschutzmittel auf der Basis anorganischer Elemente, insbesondere Aluminium, Magnesium, Armonium, Antimon und Zink aufgebaut sein.

Das Luftschallabsorptionsformteil kann eine von dem Verdichtungsgrad bzw. Vorverformungsgrad bzw. Verfestigungsgrad abhängige Formteildicke von 1 bis 100 mm aufweisen. Bevorzugt können die Versteifungsstege eine Stegdicke von 1 mm bis 25 mm aufweisen. Alternativ oder zusätzlich können die Kissen eine Kissendicke von 2 mm bis 100 mm aufweisen.

Gemäß einer vorteilhaften Ausgestaltung können die Versteifungsstege eine Stegdicke aufweisen und die Kissen können eine Kissendicke aufweisen, wobei die Stegdicke kleiner ist als die Kissendicke. Bevorzugt kann die Stegdicke kleiner sein als das 0,7-fache der Kissendicke, insbesondere kleiner sein als das 0,5-fache der Kissendicke.

In bevorzugter Ausgestaltung kann vorgesehen sein, dass die Versteifungsstrukturen bzw. die Versteifungsstege durch Verformen, eines plattenförmigen Halbzeugs hergestellt sind bzw. werden.

In weiter bevorzugter Ausgestaltung kann vorgesehen sein, dass die Versteifungsstrukturen bzw. die Versteifungsstege derart hergestellt sind bzw. werden, dass das Fasermaterial im Wesentlichen nur auf einer Seite des Luftschallabsorptionsformteils, insbesondere durch Verformen, verdichtet ist bzw. wird.

Die Eigensteifigkeit des Luftschallabsorptionsformteils kann in besonderem Maße weiter erhöht werden, wenn die Versteifungsstrukturen bzw. die Versteifungsstege derart hergestellt sind bzw. werden, dass das Fasermaterial auf beiden Seiten des Luftschallabsorptionsformteils, insbesondere durch Verformen, verdichtet ist bzw. wird und/oder wenn ein erster, ein Kissen begrenzender Versteifungssteg gegenüber einem zweiten, dasselbe Kissen begrenzender Versteifungssteg in der Höhe, d. h. in Dickenrichtung, versetzt, insbesondere oberhalb oder unterhalb des zweiten Versteifungssteges, angeordnet ist.

Bevorzugt sind bzw. werden die Versteifungsstrukturen bzw. die Versteifungsstege durch Pressen oder Tiefziehen hergestellt.

Als, vorzugsweise pulverförmige, Bindemittel können vorzugsweise Phenol-Formaldehydharze verwendet werden. Es versteht sich jedoch, dass als, vorzugsweise pulverförmiges, Bindemittel auch Epoxidharz, Melaminharz und/oder Polyesterharz eingesetzt werden kann. Bevorzugt kann das Bindemittel pulverförmig dem Fasermaterial zugesetzt sein bzw. werden. Das Bindemittel kann mit einem Bindemittelanteil von 4 bis 50 Gew.% bezogen auf die Faserschicht bzw. bezogen auf das Fasermaterial zugesetzt sein.

Es kann vorgesehen sein, dass das Luftschallabsorptionsformteil mehrschichtig gestaltet ist. Insbesondere kann das Luftschallabsorptionsformteil zusätzlich mit wenigstens einer Schutzschicht, insbesondere wenigstens einer Deckschutzschicht, zum Schutz der Faserschicht vor Feuchte, Lösungsmitteln, wässrigen Lösungen, Temperatureinwirkungen und/oder mechanischen Einwirkungen versehen sein. Eine derartige Schutzschicht kann nur auf der Oberseite oder nur auf der Unterseite oder bevorzugt auf der Oberseite und auf der Unterseite der Faserschicht vorgesehen sein. Alternativ oder zusätzlich kann als weitere Schicht eine Sperrschicht zur akustischen Dämmung bzw. eine akustisch dämmende Sperrschicht und/oder eine Sperrschicht als Hilfsschicht bei der Herstellung des Luftschallabsorptionsformteils vorgesehen sein.

Bei der vorstehend erwähnten Schutzschicht, insbesondere der Deckschutzschicht, kann es sich bevorzugt um ein Vlies, insbesondere um ein Spinn- oder Nadelvlies und/oder um eine Aluminiumfolie handeln. Das Vlies kann ein Flächengewicht von bevorzugt 20 bis 300 g/m² aufweisen. Die Aluminiumfolie kann gelocht und/oder perforiert und/oder genoppt und/oder geprägt und/oder kalottiert sein und/oder kann eine Foliendicke von 50 bis 300 mm aufweisen. Derartige Vliese können bevorzugt im gleichen Prozess wie das Halbzeug bzw. die Faserschicht verarbeitet werden. Ein derartiges Vlies könnte auch als ein Bestandteil des Halbzeuges bzw. der Faserschicht angesehen werden. Es wird also bevorzugt in einem Ein-Stufen-Prozess auf dem Absorber in der Regel thermisch fixiert. Grundsätzlich ist jedoch auch ein zweistufiger Fertigungsprozess für das Aufbringen des Vlieses möglich, sei es durch Pressen oder durch Kleberkaschieren. Je nach Anforderung ist es auch möglich, dass alternativ oder zusätzlich Aluminiumfolie eingesetzt wird.

Bevorzugt kann die Sperrschicht als Versteifungs-, Verfestigungs-, Schallabsorptions- und/oder Schalldämmschicht gestaltet sein und/oder kann die Sperrschicht ein Flächengewicht von bis zu 5 kg/m² aufweisen.

Die Sperrschicht kann aus oder mit Bitumen und/oder aus Kunststoff, insbesondere aus Polyethylen (PE), Polypropylen (PP), Polyurethan (PUR) und/oder Polyester (PES) gebildet sein bzw. bestehen.

Gemäß einem weiter bevorzugt vorgesehenen Ausführungsbeispiel kann vorgesehen sein, dass wenigstens ein durch mehrere Versteifungsstege vollumfänglich begrenztes bzw. umschlossenes Kissen über wenigstens einen weiteren Versteifungssteg, vorzugsweise über wenigstens zwei sich, insbesondere rechtwinklig, kreuzende Versteifungsstege, der bzw. die jeweils durch wenigstens einen Kissenteil bzw. ein Kissen, vorzugsweise durch zwei Kissenteile bzw. zwei Kissen, des Kissens von den dieses Kissen vollumfänglich begrenzenden bzw. umschließenden Versteifungsstegen beabstandet angeordnet ist bzw. sind, in wenigstens zwei Kissenteile bzw. Teilkissen oder Kissen unterteilt ist. Ein derartiges Luftschallabsorptionsformteil lässt sich besonders kostengünstig und einfach zu einem besonders eigensteifen, selbsttragenden Formteil mit besonders vorteilhaften akustischen Eigenschaften herstellen.

Alternativ oder zusätzlich kann vorgesehen sein, dass wenigstens eine aus verdichtetem und verfestigtem Fasermaterial gebildete ring- bzw. rahmenförmige Versteifungsstruktur ausgebildet ist bzw. wird, deren Projektion in Dickenrichtung des Luftschallabsorptionsformteils wenigstens eine, aus verdichtetem und verfestigtem Fasermaterial gebildete Versteifungsstruktur aus sich kreuzenden bzw. in Form eines Kreuzes oder Sterns angeordneten Versteifungsstegen, wenigstens teilweise, vorzugsweise vollumfänglich, umgreift bzw. umschließt, die senkrecht zur Dickenrichtung des Luftschallabsorptionsformteils betrachtet, beabstandet zu der ring- bzw. rahmenförmigen Versteifungsstruktur angeordnet ist. Durch diese Maßnahmen lassen sich die vorstehend beschriebenen Vorteile ebenfalls erreichen oder noch weiter verbessern.

Die Erfindung betrifft auch ein Verfahren zur Herstellung eines, insbesondere die Merkmale einer der Ansprüche 1 bis 9 und/oder die vorstehend bezeichneten Merkmale einzeln oder im Kombination aufweisenden, Luftschallabsorptionsformteils, insbesondere zur Schallisolation bzw. -kapselung eines Aggregates, einer Maschine, eines Motors, eines Getriebes oder einer Pumpe, vorzugsweise für ein Kraftfahrzeug, das eine Faserschicht aus Fasermaterial aufweist, die mit einem duroplastischen Bindemittel versetzt ist bzw. wird, das, vorzugsweise unter Einwirkung von erhöhten Temperaturen, unter Ausbildung eines duroplastisch gebundenen Faserschichtverbunds ausgehärtet wird, wobei unterschiedlich stark verdichtete und verfestigte Bereiche der Faserschicht dadurch hergestellt werden, dass das Fasermaterial der Faserschicht, vorzugsweise bereichsweise, insbesondere lokal, unter Ausbildung von gitter- bzw. netzartige oder als Gitter oder als Netz gestaltete Strukturen bildenden Stege durch Verformen verdichtet wird, wobei bzw. wodurch mehrere Kissen aus dem nicht oder weniger stark verdichteten Fasermaterial gebildet werden, die von den Stegen begrenzt sind, und wobei das Bindemittel während und/oder nach der Verformung bzw. Verdichtung des Fasermaterials ausgehärtet wird bzw. aushärtet, so dass im ausgehärteten Zustand gitter- bzw. netzartige oder als Gitter bzw. Netz gestaltete Versteifungsstrukturen bildende Versteifungsstege aus dem verdichteten und verfestigten Fasermaterial ausgebildet sind, welche die luftschallabsorbierenden Kissen aus dem nicht oder weniger stark verdichteten und aus dem nicht oder weniger stark verfestigten Fasermaterial, wenigstens teilweise, vorzugsweise vollumfänglich, begrenzen bzw. umschließen bzw. umgreifen, wobei die Kissen auf beiden Seiten des Luftschallabsorptionsteils über die Oberfläche der Versteifungsstege hoch stehen.

Die Versteifungsstrukturen bzw. die Versteifungsstege können bevorzugt durch Pressen oder durch Tiefziehen hergestellt werden. Insbesondere in den Randbereichen bzw. an den Rändern des Luftschallabsorptionsformteils kann gleichzeitig mit der Herstellung der Versteifungsstrukturen oder auch erst anschließend das Randmaterial "abgepincht" werden, d. h. unter Druck, vorzugsweise auch unter erhöhter Temperatur, verdichtet und verfestigt werden. Die Herstellung kann also auch durch ein kombiniertes Press-Pinch-Verfahren erfolgen.

Die Faserschicht kann, insbesondere als Halbzeug, in ein offenes Presswerkzeug eingelegt werden und kann anschließend bei geeigneten Betriebsparametern, insbesondere bei erhöhten Temperaturen, über eine bestimmte Zeit verpresst werden. Während des Pressprozesses härtet das Bindemittel in der Faserschicht bzw. im Halbzeug aus, so dass ein formstabiles, selbsttragendes dreidimensionales Formteil erhalten wird. Unter Umständen kann das Luftschallabsorptionsformteil auch im Tiefziehverfahren oder im Blasformverfahren hergestellt werden. Zu diesem Zwecke kann das Halbzeug bzw. die Faserschicht mit einer vorzugsweise luftdichten Deckfolie versehen werden. Dadurch ist es möglich, ein Vakuum anzulegen und das zu verdichtende Material tiefzuziehen. Eine Aushärtung des Bindemittels kann durch Temperierung des Halbzeugs bzw. der Faserschicht vor, während und/oder nach dem Tiefziehprozess erfolgen.

Mit dem erfindungsgemäßen Verfahren lassen sich Luftschallabsorptionsformteile mit mehreren schallabsorbierenden Kissen herstellen, zwischen denen fest verpresste Bereiche erhalten werden, die eine netzartige tragende Struktur über einen Bauteilbereich, vorzugsweise über das ganze Bauteil darstellen. Die Kissen sind nicht oder bevorzugt nur relativ weich verpresst und wirken als Luftschallabsorber. Erfindungsgemäß lässt sich ein vorzugsweise mehrlagiger Aufbau von mit Bindemittel durchtränktem bzw. durchsetztem Halbzeug aus Fasermaterial ohne den Einsatz bzw. die Notwendigkeit zur Verwendung eines Trägermaterials bzw. eines Trägers, insbesondere von SMC-Trägern, herstellen. Eine eventuell notwendige Dämmung kann durch Sperrfolien erreicht werden, ähnlich wie durch Gummi im sogenannten Doppel-Density-Verfahren.

Durch die erfindungsgemäßen Maßnahmen ergeben sich erhebliche Vorteile, insbesondere ein großes Potential bei der Materialkostenreduzierung, bei der Reduzierung der Formteilgewichte und beim Investitionsbedarf. Denen die erfindungsgemäßen Formteile können ohne Weiteres auf vorhandenen Anlagen, insbesondere Pressen, hergestellt werden. Gegebenenfalls können auch nicht ausgelastete Anlagen vorteilhaft genut zt werden. Zu diesem Zwecke können die Werkzeugkonturen bzw. die Werkzeuge einfach und kostengünstig entsprechend den darzustellenden Gittern bzw. Netzen bzw. Verstärkungsstrukturen modifiziert werden. Beispielsweise können gitter- bzw. netzartige oder als Gitter oder Netz gestaltete Werkzeugeinsätze verwendet werden.

Weitere Vorteile, Merkmale und Gesichtspunkte der Erfindung lassen sich dem nachfolgenden Beschreibungsteil entnehmen, in dem bevorzugte Ausführungsbeispiele der Erfindung anhand der Zeichnungen beschrieben werden.

Es zeigen:
- Fig. 1: eine schematische Seitenansicht eines Kraftfahrzeugs mit einem erfindungsgemäßen Schallabsorptionsformteil in Form einer Motorkapsel;
- Fig. 2 bis 5: Gegenstände, die nicht Bestandteil der beanspruchten Erfindung sind,

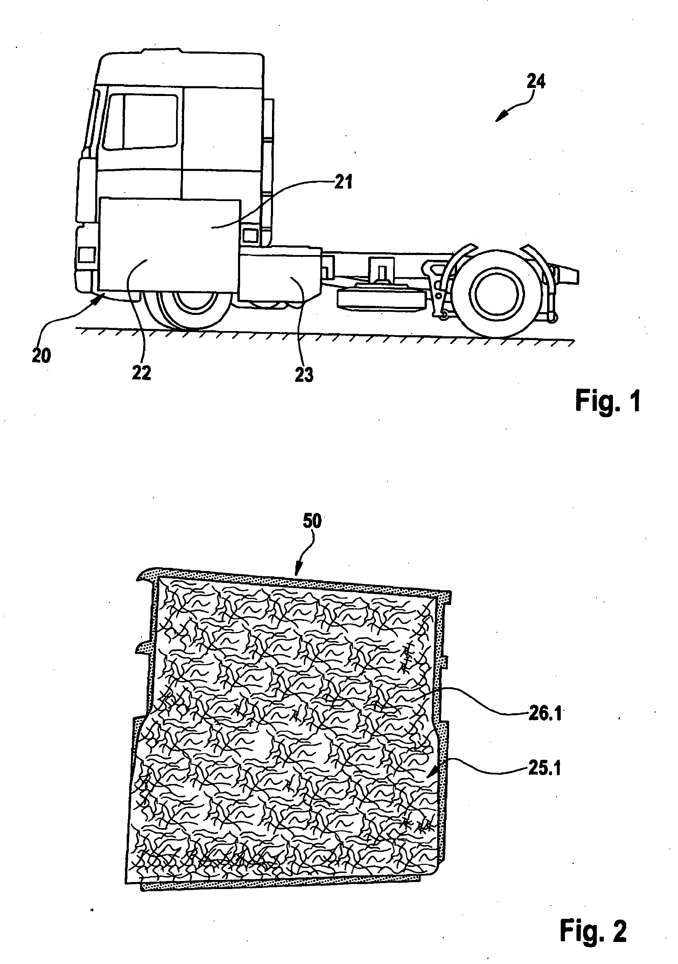

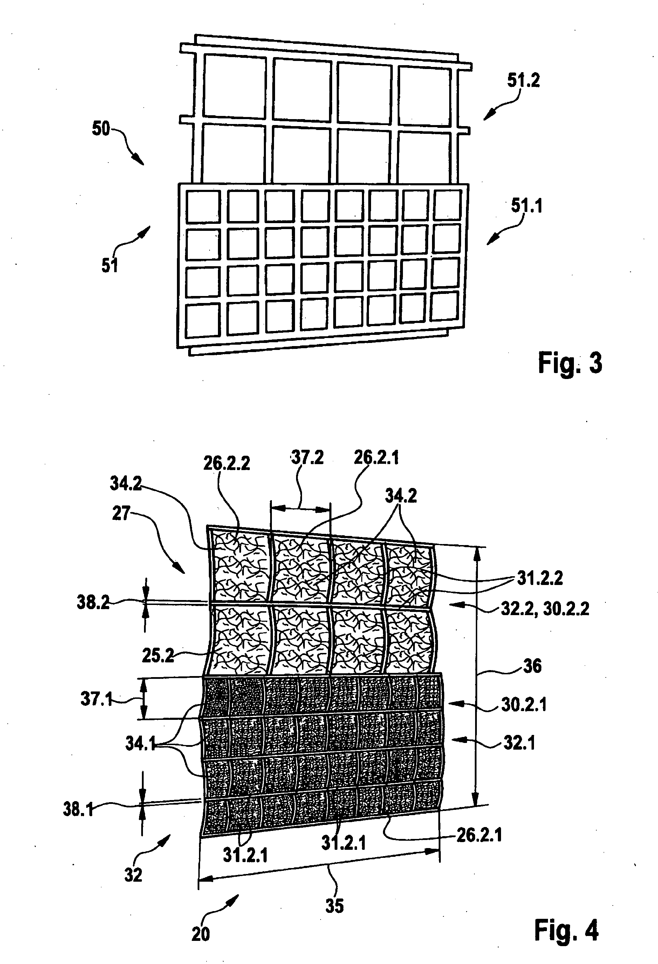

- Fig. 2: eine Draufsicht auf ein Halbzeug in Form einer Faserschicht aus Fasermaterial, die bzw. das mit einem hier duroplastischen Bindemittel versetzt ist und das auf einem in Figur 3 näher gezeigten Werkzeugteil aufgelegt ist;
- Fig. 3: einen Werkzeugteil eines Presswerkzeuges zur Herstellung des in Fig. 4 gezeigten Luftschallabsorptionsformteils;
- Fig. 4: ein mit dem Werkzeugteil nach Figur 3 hergestelltes Luftschallabsorptionsformteil in einer dreidimensionalen Darstellung;

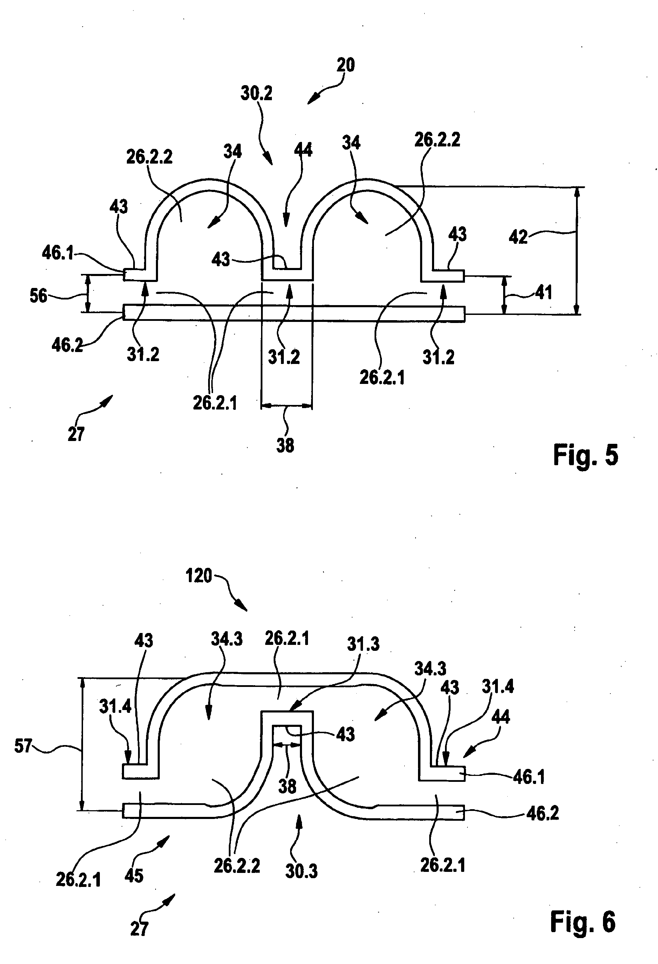

- Fig. 5: einen schematischen Querschnitt eines Luftschallabsorptionsformteils gemäß Figur 4;
- Fig. 6: einen schematischen Querschnitt eines erfindungsgemäßen Luftschallabsorptionsformteils;

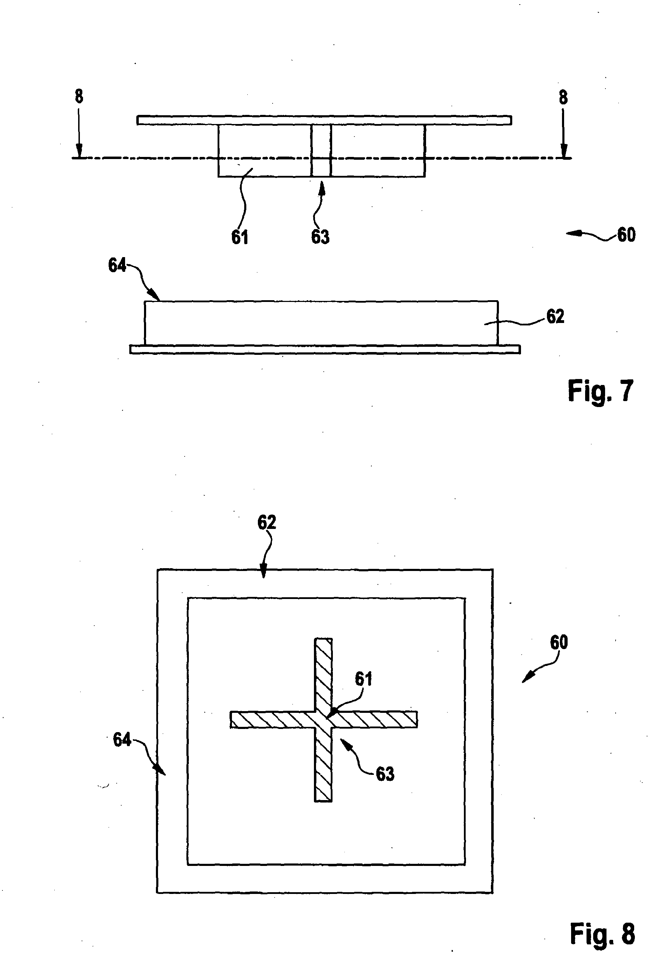

- Fig. 7: ein eine Patrize und eine Matrize enthaltendes offenes Presswerkzeug zum Herstellen erfindungsgemäßer Luftschallabsorptionsformteile;
- Fig. 8: eine Ansicht des Presswerkzeuges gemäß Figur 7 entlang der Schnittlinien 8-8;

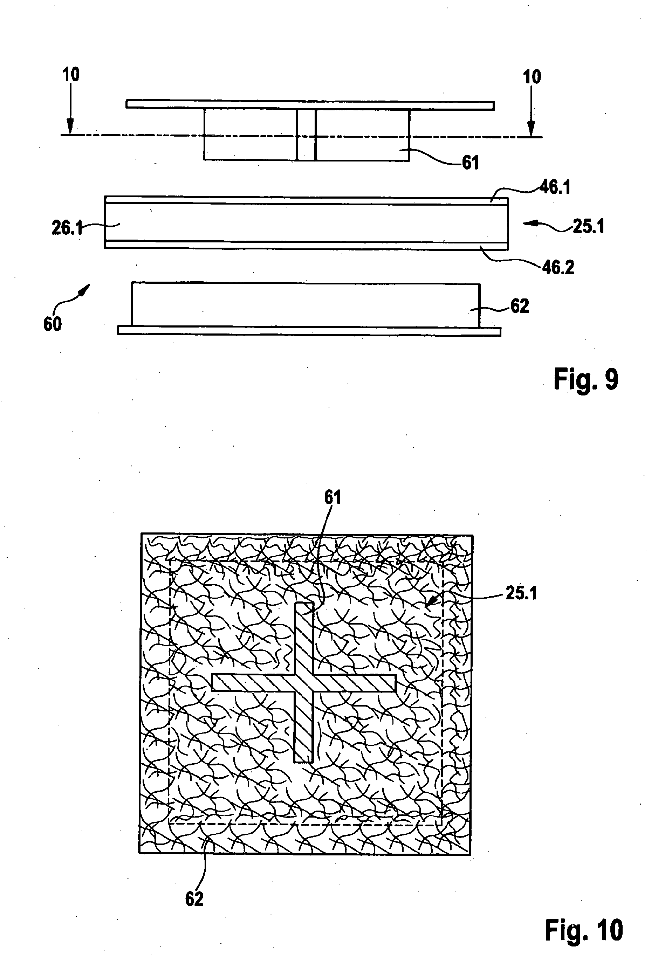

- Fig. 9: eine der Figur 7 entsprechende Seitenansicht des offenen Presswerkzeuges, wobei sich zwischen der Matrize und der Patrize ein eine Faserschicht enthaltendes Halbzeug befindet;
- Fig. 10: eine der Figur 8 entsprechende Ansicht des Presswerkzeuges entlang der Schnittlinien 10-10 in Figur 9;

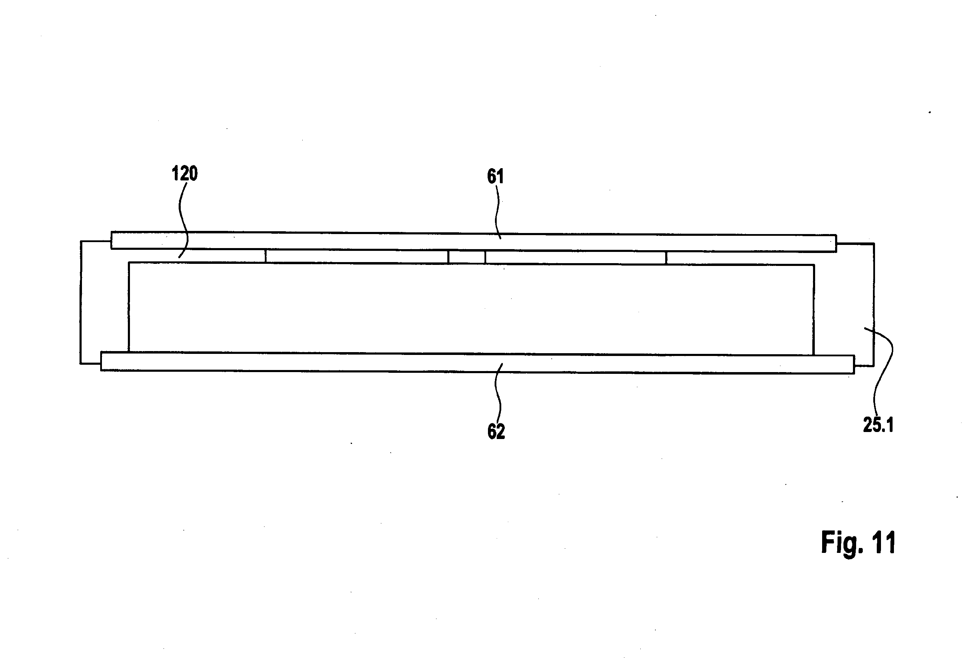

- Fig. 11: eine Seitenansicht des Presswerkzeuges gemäß den Figuren 7 bis 10 in einer geschlossenen Pressstellung, in welcher die Patrize teilweise in die Matrize eingetaucht ist;

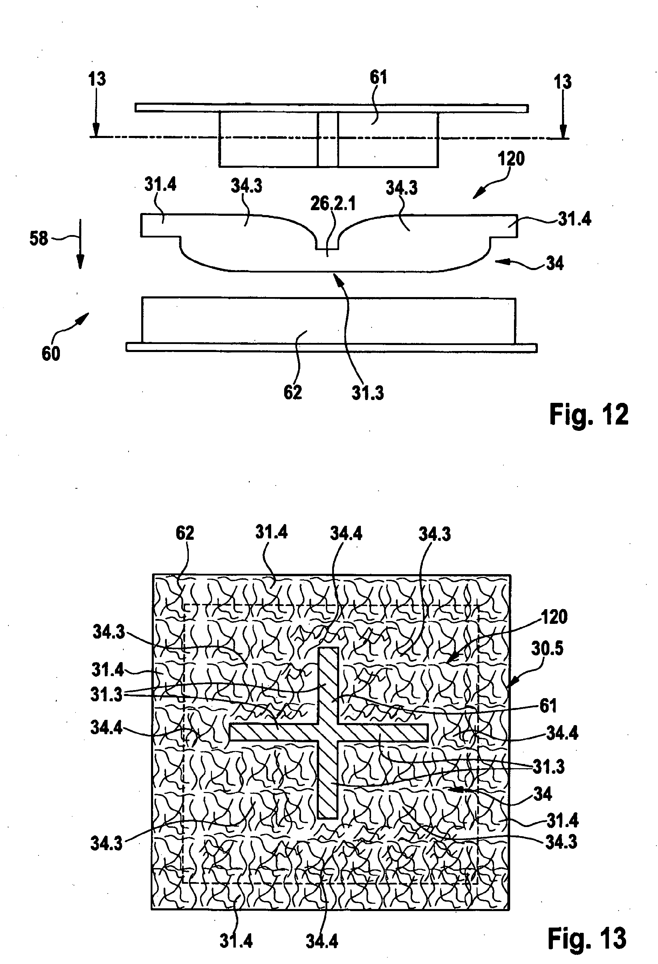

- Fig. 12: das wieder geöffnete Presswerkzeug mit einem zwischen der Patrize und der Matrize gezeigten, fertig verpressten erfindungsgemäßen Luftschallabsorptionsformteil;
- Fig. 13: eine Ansicht des wieder geöffneten Presswerkzeuges entlang der Schnittlinien 13-13 in Figur 12;

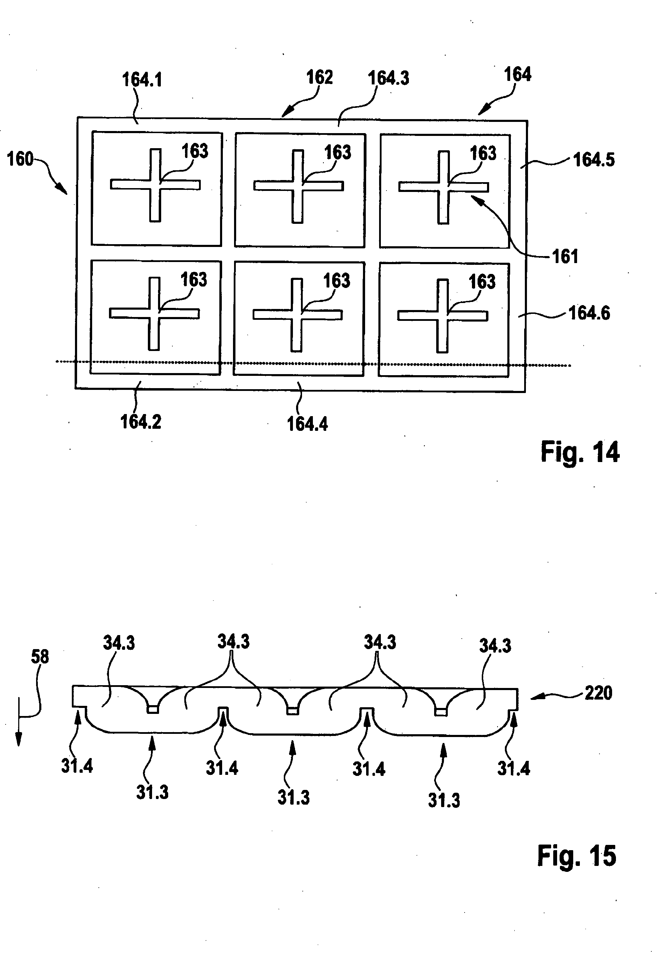

- Fig. 14: einen Ausschnitt eines Mehrfachpresswerkzeuges zum Herstellen eines in den Figuren 15 bis 17 gezeigten weiteren Ausführungsbeispiels eines erfindungsgemäßen Luftschällabsorptionsformteils;
- Fig. 15: einen Querschnitt des mit dem Presswerkzeug gemäß Figur 14 hergestellten Luftschallabsorptionsformteils;

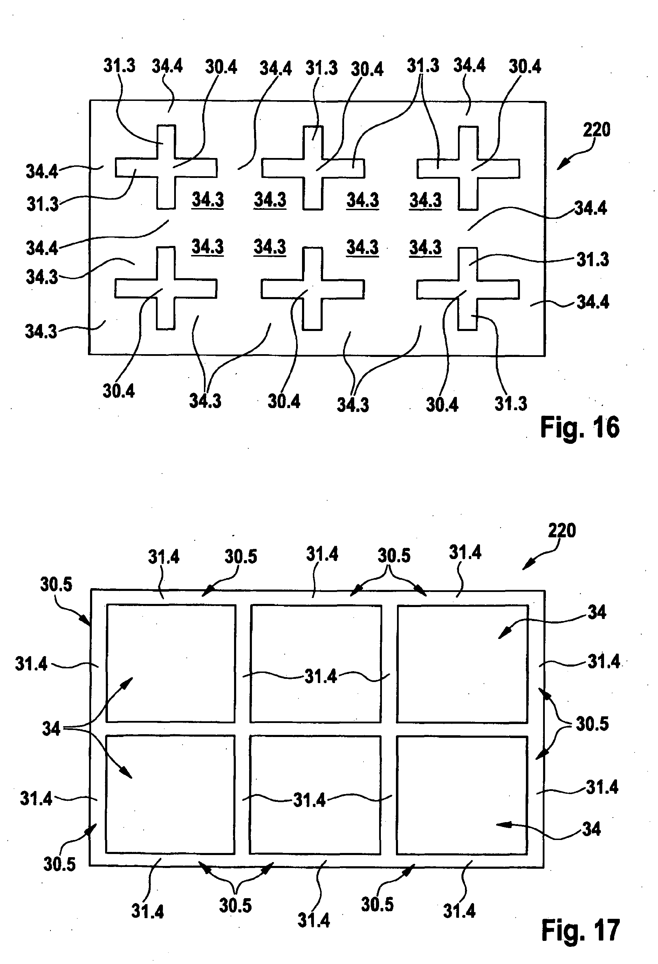

- Fig. 16: eine Draufsicht auf das in Figur 15 gezeigte Luftschallabsorptionsformteil;
- Fig. 17: eine Unteransicht des in Figur 15 gezeigten Luftschallabsorptionsformteils.

In Figur 1 sind am Beispiel eines Kraftfahrzeugs 24 in Form einer Zugmaschine eines Lastkraftwagens mögliche Anwendungsgebiete zum Einsatz eines erfindungsgemäßen Luftschallabsorptionsformteils 20 veranschaulicht. Dieses kann als Motorkapsel 21 zur Kapselung bzw. Schallisolation eines Motors 22 eingesetzt werden. Es versteht sich jedoch, dass die erfindungsgemäßen Luftschallabsorptionsformteile auch zur Kapselung bzw. Schallisolation des Getriebes 23 oder weiterer Schallerzeuger, insbesondere eines Kraftfahrzeugs, eingesetzt werden können.

Bei der Herstellung der Luftschallabsorptionsformteile 20, 120, 220 wird vorzugsweise von einem plattenförmigen Halbzeug 25.1 in Form einer Faserschicht ausgegangen, die nicht verfestigtes oder allenfalls nur vorverfestigtes Fasermaterial 26.1 enthält und die bzw. das mit einem hier pulverförmigen Bindemittel versetzt ist. Dieses Halbzeug kann mit einer oder zwei Deckschutzschichten 46.1, 46.2 versehen sein, wie in den Figuren 5, 6 und 9 schematisch veranschaulicht. Es versteht sich jedoch, dass das Bindemittel auch in flüssiger Form zugesetzt sein bzw. werden kann. Bei dem Bindemittel handelt es sich hier um ein Phenol-FormaldehydHarz bzw. um ein Phenolharz. Es versteht sich jedoch, dass es sich bei dem Bindemittel auch um ein Epoxidharz handeln kann. Als Fasermaterial wird bevorzugt Baumwollmischgewebe verwendet. Dieses wird bevorzugt in Form von bzw. als Reißbaumwolle verarbeitet. Die Faserschicht 25.1 wird aus dem Baumwollmischmaterial (BMW) bzw. aus der Reißbaumwolle und dem pulverförmigen Phenolharz üblicherweise auf trockenem Wege hergestellt. Dabei können die gerissenen Baumwollfasern unter Zumischung des Bindemittelpulvers, beispielsweise über einen Bindemittel-Luft-Strom, vermischt werden und anschließend zu der Faserschicht 25.1 verarbeitet werden. Die so hergestellte Faserschicht 25.1 kann noch ungebunden sein, d. h. das Bindemittel kann noch nicht ausgehärtet sein oder kann die so hergestellte Faserschicht 25.1 vorgebunden sein, d. h. das Bindemittel kann vorgehärtet, jedoch noch nicht vollständig ausgehärtet sein. Demgemäß kann das darin enthaltene Fasermaterial 26.1 nicht verfestigt oder nur vorverfestigt sein.

Zur Herstellung der erfindungsgemäßen Luftschallabsorptionsformteile 20 wird von einem ungebundenen bzw. vorgebundenen, hier plattenförmigen, Halbzeug in Form einer Faserschicht 25.1 ausgegangen. Dieses Halbzeug kann beispielsweise mit Hilfe des in Figur 3 näher gezeigten Werkzeugteils 50 eines nicht gezeigten Presswerkzeugs oder beispielsweise mit Hilfe der in den Figuren 7 bis 14 gezeigten Werkzeugteile von Presswerkzeugen 60, 160, vorzugsweise unter Anwendung erhöhter Temperaturen, verpresst werden. Das Halbzeug wird dazu in bzw. auf eine Pressform ein- bzw. aufgelegt und bei geeigneten Betriebsparametern bis zu mehrere Minuten lang gepresst. Während des Pressprozesses härtet das Bindemittel im Halbzeug 25.1 aus, wodurch ein formstabiles, selbsttragendes, dreidimensionales Luftschallabsorptionsformteil 20, 120, 220 entsteht. Gleichzeitig bzw. nachfolgend wird das Fasermaterial in den Randbereichen unter Druck, vorzugsweise bei erhöhten Temperaturen, verdichtet und verfestigt. Diesen Vorgang bezeichnet man auch mit "Abpinchen". Etwaig überstehende Randbereiche werden gleichzeitig oder nachfolgend abgetrennt.

Es versteht sich, dass zur Herstellung eines erfindungsgemäßen Luftschallabsorptionsformteils auch ein Tiefziehprozess durchgeführt werden kann. Zu diesem Zwecke kann das Fasermaterial mit einer Deckfolie versehen werden. Dadurch ist es möglich, am Halbzeug ein Vakuum anzulegen und anschließend das Material tiefzuziehen. Eine Aushärtung des Bindemittels kann durch gleichzeitige Temperierung des Halbzeuges vor, während und nach dem Tiefziehprozess erfolgen.

Bevorzugt werden jedoch die Luftschallabsorptionsformteile 20, 120, 220 verpresst, d. h. durch Pressen hergestellt, wobei das Fasermaterial 26.1 bereichsweise und/oder lokal durch Verformen verdichtet wird. Erfindungsgemäß kann also die Herstellung eines eine Faserschicht 25.1 aus Fasermaterial 26.1 enthaltenden Luftschallabsorptionsformteils 20, 120, 220 derart erfolgen, dass die mit einem duroplastischen Bindemittel versetzte Faserschicht 25.1, vorzugsweise unter Einwirkung von erhöhten Temperaturen, unter Ausbildung eines duroplastisch gebundenen Faserschichtverbunds 27 ausgehärtet wird, wobei erfindungsgemäß unterschiedlich stark verdichtete und verfestigte Bereiche der Faserschicht 25.1 dadurch hergestellt werden können, dass das Fasermaterial 26.1 der Faserschicht 25.1 unter Ausbildung von gitter- bzw. netzartige Strukturen bildenden Stegen durch Verformen verdichtet wird, wobei bzw. wodurch mehrere Kissen aus dem nicht oder weniger stark verdichteten Fasermaterial gebildet werden, die von den Stegen begrenzt sind, und dass das Bindemittel während und/oder nach der Verformung bzw. Verdichtung des Fasermaterials ausgehärtet wird, so dass im ausgehärteten Zustand gitter- bzw. netzartige Versteifungsstrukturen 30.2; 30.2.1, 30.2.2; 30.3, 30.4 bildende Versteifungsstege 31.2; 31.2.1, 31.2.2; 31.3, 31.4 aus dem verdichteten und verfestigten Fasermaterial 26.2.1 ausgebildet sind, welche das bzw. die Luftschall absorbierenden Kissen 34; 34.1, 34.2; 34.3, 34.4 aus dem nicht oder weniger stark verdichteten und dem nicht oder weniger stark verfestigten Fasermaterial 26.2.2 im Wesentlichen wenigstens teilweise, vorzugsweise vollumfänglich, begrenzen bzw. umschließen.

Zur Herstellung des in Figur 4 gezeigten Ausführungsbeispiels eines Luftschallabsorptionsformteils 20 kann der in Figur 3 gezeigte Werkzeugteil 50 eingesetzt werden. Dieser kann in einfacher Art und Weise in ein bereits vorhandenes, nicht gezeigtes Presswerkzeug eingesetzt werden. Dieser Werkzeugteil 50 bildet ein Gitter 51. Das Gitter 51 umfasst hier im Wesentlichen zwei Gitter 51.1 und 51.2, welche unterschiedlich große Gitteröffnungen aufweisen. Das eine Gitter 51.1 umfasst eine Vielzahl von hier 32 durch Gitterstäbe quadratisch begrenzte Öffnungen, während das andere Gitter 51.2 des Gitters 51 eine Mehrzahl von hier acht deutlich größeren Öffnungen aufweist, die ebenfalls durch Gitterstäbe jeweils quadratisch begrenzt sind.

Das mit Hilfe des als Gitter 51 ausgebildeten Werkzeugteils 50 durch Pressen hergestellte und in Figur 4 gezeigte Luftschallabsorptionsformteil 20 weist eine Faserschicht 25.2 aus Fasermaterial 26.2 auf, die mit einem hier duroplastischen Bindemittel versetzt ist und das unter Ausbildung eines hier duroplastisch gebundenen Faserschichtverbunds 27 ausgehärtet ist. Die Faserschicht 25.2 des Faserschichtverbunds 27 weist erfindungsgemäß unterschiedlich stark verdichtete und verfestigte Bereiche aus gitter- bzw. netzartige Versteifungsstrukturen 30.2; 30.2.1, 30.2.2; 30.3 ausbildenden, aus verdichtetem und verfestigtem Fasermaterial 26.2.1 bestehenden Versteifungsstegen 31.2.1, 31.2.2 und aus mehreren von den Versteifungsstegen 31.2.1, 31.2.2 vollumfänglich begrenzten bzw. umschlossenen bzw. umgriffenen luftschallabsorbierenden Kissen 34; 34.1, 34.2 aus dem nicht oder weniger stark verdichteten und dem nicht oder weniger stark verfestigten Fasermaterial 26.2.2 auf (siehe auch Figur 5). Dies gilt nicht nur für das in den Figuren 4 und 5 gezeigte Ausführungsbeispiel, sondern auch für die in den Figuren 6 und 12 sowie 15 bis 17 gezeigten Ausführungsbeispiele von erfindungsgemäßen Luftschallabsorptionsformteilen 120, 220.

Erfindungswesentlich ist es, dass die Funktion der akustischen Wirksamkeit, d. h. zur Schallabsorption bzw. Schallisolation, und auch die Funktion der mechanischen Aussteifung zur Ausbildung eines eigensteifen und selbsttragenden Formteils, durch ein und dasselbe Fasermaterial erfüllt wird, das nur hinsichtlich seiner Verarbeitung bereichsweise unterschiedlich behandelt wird.

Bei dem in Figur 4 gezeigten Ausführungsbeispiel eines Luftschallabsorptionsformteils 20 erstrecken sich die sich kreuzenden und ineinander übergehenden Versteifungsstege 31.2.1 und 31.2.2 über einen mehrere Kissen 34.1, 34.2 enthaltenden Flächenbereich des Luftschallabsorptionformteils 20, und zwar hier jeweils über die gesamte Breite 35 des Luftschallabsorptionsformteils 20 ununterbrochen durchgehend entlang der jeweiligen Kissen 34.1 und 34.2. Im gezeigten Ausführungsbeispiel erstrecken sich außerdem die in der Horizontalmitte der Breite 35 senkrecht zur Breitenerstreckung bzw. Tiefenerstreckung angeordneten Versteifungsstege 31.2.1 und 31.2.2 über die gesamte Tiefe 36 des Luftschallabsorptionsformteils 20 ununterbrochen durchgehend entlang der Kissen 34.1 und 34.2.

In dem durch das erste Gitter 51.1 des Werkzeugteils 50 hergestellten Bauteilbereich des Luftschallabsorptionsformteils 20 sind dementsprechend quadratische Versteifungsstrukturen 30.2.1 in Form eines Gitters 32.1 ausgebildet, während in dem durch das zweite Gitter 51.2 des Werkzeugteils 50 hergestellten Bauteilbereich des Luftschallabsorptionsformteils 20 die dementsprechend ebenfalls quadratischen Versteifungsstrukturen 30.2.2 in Form eines Gitters 32.2 ausgebildet sind. Dessen Kissen 34.2 bzw. Kammern sind deutlich größer als die durch die Versteifungsstege 31.2.1 begrenzten Kammern bzw. Kissen 34.1 der Versteifungsstrukturen 30.2.1.

Die kleineren Kissen 34.1 bzw. die diese vollumfänglich begrenzenden bzw. umschließenden bzw. umfassenden Versteifungsstege 31.2.1 weisen jeweils eine Kantenlänge 37.1 auf, die hier etwa 5 x 5 cm beträgt. Im Unterschied dazu weisen die mit den anderen quadratischen Versteifungsstrukturen 30.2.2 begrenzten größeren Kissen 34.2 bzw. die diese vollumfänglich begrenzenden bzw. umschließenden bzw. umfassenden Versteifungsstege 31.2.2 jeweils eine Kantenlänge 37.2 auf, die hier etwa 12 x 12 cm beträgt.

Die Versteifungsstege 31.2.1 und 31.2.2 der Versteifungsstrukturen 30.2.1 und 20.2.2 weisen zwischen den jeweils benachbarten Kissen 34.1, 34.2 eine im Wesentlichen konstante Stegbreite 38.1, 38.2 auf, die hier jeweils etwa gleich groß ist. Es versteht sich jedoch, dass die Stegbreiten auch unterschiedlich groß sein können, und zwar auch mit Bezug auf eines oder mehrere der davon begrenzten Kissen. In dem in Figur 4 gezeigten Ausführungsbeispiel weisen die durch die Versteifungsstrukturen 30.2.1 und 30.2.2 begrenzten Kissen 34.1 und 34.2 eine gleiche, hier quadratische Form, jedoch eine unterschiedliche Größe auf. In den gezeigten Ausführungsbeispielen besteht die Faserschicht 25.2 des Luftschallabsorptionsformteils 20 jeweils bevorzugt aus Baumwollmischfasern. Es versteht sich jedoch, dass die Faserschicht auch mit anderen Fasern und/oder Gewirken verstärkt bzw. armiert sein kann, vorzugsweise mit Glasfasern oder Glasgewirken. Dadurch kann in kostengünstiger Art und Weise die Eigensteifigkeit des erfindungsgemäßen Luftschallabsorptionsformteils weiter erhöht werden.

Wie am Beispiel des Querschnitts gemäß Figur 5 veranschaulicht, weist das Luftschallabsorptionsformteil 20 über seinen Querschnitt und folglich abhängig vom Verdichtungsgrad eine unterschiedliche Formteildicke 41, 42 auf. Im Bereich der Versteifungsstege 31.2 weist das Luftschallabsorptionsformteil 20 eine der Stegdicke 41 entsprechende Formteildicke auf und im Bereich der Kissen 34 weist das Luftschallabsorptionsformteil 20 eine der Kissendicke 42 entsprechende Formteildicke auf. Das die Kissen 34 bildende Fasermaterial 26.2.2 ist gegenüber dem Fasermaterial 26.2.1 der Versteifungsstege 31.2 nicht bzw. weniger stark verdichtet und auch weniger stark verfestigt. Umgekehrt betrachtet, ist das Fasermaterial 26.2.1 der Versteifungsstege 31.2 stärker verdichtet und stärker verfestigt als das Fasermaterial 26.2.2 der "weichen" schallabsorbierenden Kissen 34.

Die Stegdicke 41 ist in den gezeigten Ausführungsbeispielen stets kleiner als die Kissendicke 42. Konkret ist die Stegdicke 41 in den gezeigten Ausführungsbeispielen stets kleiner als die Hälfte der Kissendicke 42. Dadurch ist das Fasermaterial 26.2.1 im Bereich der Versteifungsstege 31.2 (Figur 5) bzw. 31.3 und 31.4 (Figuren 6, 13 und 15) und auch im Bereich der in Figur 4 gezeigten Versteifungsstege 31.2.1 und 31.2.2 deutlich stärker verdichtet als das Fasermaterial 26.2.2 der jeweiligen schallabsorbierenden Kissen 34; 34.1, 34.2; 34.3.

In den in den Figuren gezeigten Ausführungsbeispielen stehen die Kissen 34; 34.1, 34.2; 34.3, 34.4 stets über die Oberfläche 43 der Versteifungsstege 31.2; 31.2.1, 31.2.2; 31.3, 31.4 hoch. In den in den Figuren 4 und 5 gezeigten Ausführungsbeispielen stehen die Kissen 34; 34.1, 34.2 nur auf einer Seite 44 des Luftschallabsorptionsformteils 20 über die Oberfläche 43 der Versteifungsstege 31.2; 31.2.1, 31.2.2 hoch. Im Unterschied dazu stehen die Kissen 34; 34.3, 34.4 bei den in den Figuren 6, 13 und 15 gezeigten Ausführungsbeispielen auf beiden Seiten 44, 45 des Luftschallabsorptionsformteils 120, 220 über die Oberfläche 43 der Versteifungsstege 31.3, 31.4 hoch.

Bei dem in den Figuren 4 und 5 gezeigten Ausführungsbeispiel sind die Versteifungsstrukturen 30.2; 30.2.1, 30.2.2 bzw. die Versteifungsstege 31.2; 31.2.1, 31.2.2 derart hergestellt bzw. werden derart hergestellt, dass das Fasermaterial 26.2.1 im Wesentlichen nur auf einer Seite 44 des Luftschallabsorptionsformteils 20 durch Verformen verdichtet ist bzw. wird. Im Unterschied dazu sind bzw. werden bei den in den Figuren 6, 13 und 15 gezeigten Ausführungsbeispielen die Versteifungsstrukturen 30.3, 30.4, 30.5 bzw. die Versteifungsstege 31.3, 31.4 derart hergestellt, dass das Fasermaterial 26.2.1 auf beiden Seiten 44, 45 des Luftschallabsorptionsformteils 120, 220 durch Verformen verdichtet ist bzw. wird.

Bei den in den Figuren 6, 12 und 15 gezeigten Ausführungsbeispielen ist es zudem so, dass ein erster, ein Kissen 34.3 begrenzender Versteifungssteg 31.3 gegenüber einem zweiten, dasselbe Kissen 34.3 begrenzenden Versteifungssteg 31.4 in der Höhe, d. h. in Dickenrichtung versetzt, oberhalb des zweiten Versteifungsstegs 31.4 angeordnet ist. Bei diesen Ausführungsbeispielen ist also die gitter- bzw. netzartige Versteifungsstruktur 30.3 jeweils derart in der dritten Dimension bzw. in Richtung der Dicke des Formteils 120, 220 verzogen bzw. versetzt, dass ein insgesamt deutlich größeres Flächenträgheitsmoment (siehe Pfeil 57) erreicht wird als im Falle des in den Figuren 4 und 5 gezeigten Ausführungsbeispiels, wo das Formteil 20 ein kleineres Flächenträgheitsmoment (siehe Pfeil 56) aufweist.

Wie aus den Figuren 5 und 6 ersichtlich, kann das erfindungsgemäße Luftschallabsorptionsformteil 20, 120 auf beiden Seiten 44 und 45 mit einer Deckschutzschicht 46.1, 46.2 versehen sein, kann also mehrschichtig gestaltet sein. Im Ausführungsbeispiel handelt es sich bei den Deckschutzschichten 46.1 und 46.2 jeweils um ein Vlies. Zum Aufbringen dieser Deckschutzschichten 46.1, 46.2 werden diese bevorzugt in einem Einstufenprozess zusammen mit dem Halbzeug 25.1 (siehe Figur 2) verarbeitet, also im Ausführungsbeispiel in einem nicht gezeigten Presswerkzeug zusammen mit dem Halbzeug 25.1 verpresst. Dabei werden die Deckschutzschichten 46.1 und 46.2 an der Faserschicht 25.1 thermisch fixiert. Es versteht sich jedoch, dass eine oder mehrere Deckschutzschichten auch in einem zweistufigen Verarbeitungsprozess, sei es durch Pressen oder aber auch durch Kleberkaschieren und dergleichen Verfahren, abhängig von der jeweiligen geometrischen Struktur, miteinander verbunden werden können.

In den Figuren 7 bis 14 sind Presswerkzeuge 60, 160 zur Herstellung von erfindungsgemäßen Luftschallabsorptionsformteilen 120, 220 dargestellt, die einen der schematischen Ansicht in Figur 6 entsprechenden Querschnitt aufweisen und die in den Figuren 12 und 15 bis 17 gezeigt sind.

Bei dem in den Figuren 7 bis 13 gezeigten Presswerkzeug 60 handelt es sich um ein Einzelwerkzeug bestehend aus einer, hier als Oberwerkzeug eingesetzten Patrize und aus einer hier als Unterwerkzeug eingesetzten Matrize 62. Diese Einzelwerkzeug 60 umfasst also zwei Werkzeughälften 61 und 62. Die Patrize 61 umfasst einen Kreuz-Stempel 63 und die Matrize 62 umfasst einen als Ring bzw. Rahmen gestalteten Stempel 64. Dieser ist im Ausführungsbeispiel als ein Vierkant-Ring bzw. Vierkant-Rahmen gestaltet. Die Außenabmaße der Patrize 61 sind, senkrecht zur Pressrichtung betrachtet, kleiner als die Innenabmaße der Matrize 62 bzw. deren Ring- bzw. Rahmen-Stempel 64. Außerdem sind die Patrize 61 und die Matrize 62 derart angeordnet und/oder geführt gelagert, dass die Patrize 61 zumindest teilweise in den durch den Ring bzw. Rahmen 64 der Matrize 62 umschlossenen Formenhohlraum jeweils beabstandet zu den seitlichen Innenwandteilen der Matrize 62 eintauchen kann. Diese Eintauch- bzw. Pressstellung ist am Beispiel der Figur 11 veranschaulicht.

In Figur 9 ist zwischen der Patrize 61 und der Matrize 62 ein Halbzeug bzw. eine Faserschicht 25.1 mit noch ungebundenen oder eventuell vorgebundenen Fasern bzw. mit nicht oder nur vorverfestigtem Fasermaterial 26.1 veranschaulicht, wobei das Fasermaterial 26.1 auf beiden Seiten jeweils mit einer Deckschutzschicht 46.1, 46.2 versehen ist. Zur Herstellung eines erfindungsgemäßen Luftschallabsorptionsformteils 120 wird nun ausgehend von der in Figur 9 gezeigten offenen Stellung des Werkzeugs 60 mit dem zwischen Matrize 62 und Patrize 61 liegenden bzw. eingelegten Halbzeug 25.1 das Presswerkzeug 60 geschlossen. Zu diesem Zwecke werden die beiden Werkzeughälften relativ aufeinander zu bewegt, und zwar bis in eine Pressstellung, in welcher das Werkzeug 60 geschlossen ist. Diese Stellung ist beispielhaft in Figur 11 veranschaulicht.

Gleichzeitig mit dem Schließen des Presswerkzeugs 60 wird das Halbzeug 25.1 unter Druck, vorzugsweise auch bei erhöhten Temperaturen, unter Ausbildung eines erfindungsgemäßen Luftschallabsorptionsformteils 120 verpresst. Das mit Hilfe des Werkzeugs 60 hergestellte Luftschallabsorptionsformteil 120 ist in Figur 12 schematisch veranschaulicht, in welcher das Werkzeug 60 wieder geöffnet dargestellt ist. Der Querschnitt dieses Luftschallabsorptionsformteils 120 entspricht dem Durchschnitt des schematisch in Figur 6 gezeigten Luftschallabsorptionsformteils 120. Das bereits vorstehend im Zusammenhang mit der Figur 6 Beschriebene gilt also in gleicher Weise auch für das Luftschallabsorptionsformteil 120 gemäß Figur 12.

Durch die Verwendung des erfindungsgemäßen Presswerkzeugs 60 zum bzw. beim Verpressen des bzw. zu dem erfindungsgemäßen Luftschallabsorptionsformteil 120 wird ein Kissen 34 hergestellt, das vollumfänglich begrenzt bzw. umfasst ist durch die durch den Ring bzw. Rahmen 64 der Matrize 62 verdichteten und verfestigten Versteifungsstege 31.4. Dieses Kissen 34 wird bei dem Zusammenspiel von Matrize 62 und Patrize 61 durch Verdichtung und Verfestigung von sich kreuzenden bzw. als Kreuz ausgebildeten Versteifungsstegen 31.3, welche durch die Aktion des Kreuz-Stempels 63 der Patrize 61 verdichtet und verfestigt wurden, in hier gleiche bzw. im Wesentlichen gleiche Kissen 34.3 bzw. Kissenteile unterteilt. Diese Kissen bzw. Kissenteile 34.3 sind untereinander im Bereich der Enden der Versteifungsstege 31.3 über Kissen bzw. Kissenteile 34.4 des Kissens 34 verbunden. Diese luftschallabsorbierenden Kissen 34; 34.3, 34.4 bestehen aus nicht oder weniger stark verdichtetem Fasermaterial, im Vergleich zu dem Verdichtungszustand des Fasermaterials der Versteifungsstege 31.3 und 31.4. Durch diese erfindungsgemäßen Maßnahmen erhält man also erneut ein eigensteifes, selbsttragendes Luftschallabsorptionsformteil 120.

Aus mehreren der am Beispiel eines Einzelpresswerkzeuges 60 in den Figuren 7 bis 13 gezeigten Werkzeugteilen lässt sich ein Mehrfach-Presswerkzeug aufbauen bzw. konstruieren. Dieses ist beispielhaft in Figur 14 in einem senkrecht zur Pressebene dargestellten Querschnitt gezeigt. Ein derartiges Mehrfachpresswerkzeug 160 kann eine, beispielsweise als Oberwerkzeug fungierende, Patrize 161 oder auch mehrere Patrizen aufweisen, das bzw. die mehrere Kreuz-Stempel 163 umfassen kann bzw. können, beispielsweise so, wie in Figur 14 dargestellt. Ferner kann dieses Presswerkzeug 160 einen oder mehrere mit mehreren Ringen bzw. Rahmen und/oder mit einem Gitter gebildeten Stempeln 164 einer Matrize 162 oder mehrerer Matrizen gestaltet sein. Ein Beispiel einer derartigen, hier als Unterwerkzeug fungierenden, Matrize 162 ist ebenfalls in Figur 14 veranschaulicht. Diese Matrize 162 umfasst einen aus hier sechs vollumfänglich geschlossenen bzw. unterbrechungsfrei gestalteten Vierkant-Rahmen bzw. - Ringen aufgebauten Matrizen-Stempel 164.1 bis 164.6. Jeder einzelne Werkzeugteil umfassend einen Ring- bzw. Rahmen-Stempel 164.1 bis 164.6 und einen Kreuz-Stempel 163 kann also hinsichtlich seiner Geometrie und hinsichtlich der Anordnung seiner Werkzeugteile relativ zueinander derart gestaltet und angeordnet sein, wie am Beispiel des in den Figuren 7 bis 13 gezeigten und vorstehend beschriebenen Einzelwerkzeugs 60 ausgeführt.

Mit Hilfe des in Figur 14 gezeigten Mehrfach-Presswerkzeuges 160 lässt sich ein erfindungsgemäßes Luftschallabsorptionsformteil 220 herstellen, dessen Querschnitt in Figur 15 und dessen Draufsicht sowie Unteransicht in den Figuren 16 und 17 veranschaulicht ist. Dieses Luftschallabsorptionsformteil 220 kann als eine Aneinanderreihung mehrerer jeweils einstückig verbundener Luftschallabsorptionsteile 120 (Figuren 6 und 12) verstanden werden. Demgemäß kann insoweit zur Vermeidung von Wiederholungen hinsichtlich der Querschnittsgestaltung, der Strunktur und des inneren Aufbaus des Luftschallabsorptionsformteils 220 auf die vorstehenden Ausführungen im Zusammenhang mit dem Luftschallabsorptionsformteil 120 hingewiesen werden.

Das in den Figuren 15 bis 17 gezeigte Luftschallabsorptionsformteil 120 umfasst hier insgesamt sechs Kissen 34, die hier jeweils vollumfänglich bzw. vollumfassend durch jeweils vier, hier senkrecht zueinander angeordnete, Versteifungsstege 31.4 um ihren Außenumfang begrenzt sind. Diese Kissen 34 sind durch als Kreuze ausgebildete Versteifungsstrukturen 30.4 von jeweils zwei sich senkrecht kreuzenden Versteifungsstegen 31.3 in vier Teilkissen bzw. Kissen 34.4 unterteilt bzw. nach innen begrenzt. Man erhält wiederum ein eigensteifes, selbsttragendes Luftschallabsorptionsformteil 220.

**BEZUGSZEICHENLISTE**

| | | | |
|---|---|---|---|
| 20 | Luftschallabsorptionsformteil | 30.4 | Versteifungsstruktur/ Kreuz |
| 21 | Motorkapsel | 30.5 | (rahmenförmige) Versteifungsstruktur |
| 22 | Motor | | |
| 23 | Getriebe | 31.2 | Versteifungssteg |
| 24 | Kraftfahrzeug/LKW/ LKW-Zugmaschine | 31.2.1 | Versteifungssteg |
| | | 31.2.2 | Versteifungssteg |
| 25.1 | Faserschicht/Halbzeug (ungebunden, evtl. vorgebunden) | 31.3 | Versteifungssteg |
| | | 31.4 | Versteifungssteg |
| | | 32 | Gitter |
| 25.2 | Faserschicht von 27 (gebunden) | 32.1 | Gitter |
| | | 32.2 | Gitter |
| 26.1 | Fasermaterial (nicht oder nur vorverfestigt) | 34 | Kissen |
| | | 34.1 | Kissen |
| | | 34.2 | Kissen |
| 26.2 | Fasermaterial | 34.3 | Kissen |
| 26.2.1 | Fasermaterial (stark verdichtet und verfestigt) | 34.4 | Kissenteil/Kissen |
| | | 35 | Breite von 20 |
| | | 36 | Tiefe von 20 |
| 26.2.2 | Fasermaterial (weniger stark verdichtet und verfestigt) | 37.1 | Kantenlänge von 30.2.1 |
| | | 37.2 | Kantenlänge von 30.2.2 |
| 27 | Faserschichtverbund | 38 | Stegbreite |
| 30.2 | Versteifungsstruktur | 38.1 | Stegbreite |
| 30.2.1 | Versteifungsstruktur | 38.2 | Stegbreite |
| 30.2.2 | Versteifungsstruktur | 41 | Stegdicke/Formteildicke |
| 30.3 | Versteifungsstruktur | | |
| 42 | Kissendicke/Formteildicke | 164 | Ring/Rahmen/Gitter (-Stempel) |
| 43 | Oberfläche | 164.1 | Ring/Rahmen (-Stempel) |
| 44 | Seite | | |
| 45 | Seite | 164.2 | Ring/Rahmen (-Stempel) |
| 46.1 | Deckschutzschicht/ Deckvlies | | |
| | | 164.3 | Ring/Rahmen (-Stempel) |
| 46.2 | Deckschutzschicht/ Deckvlies | | |
| | | 164.4 | Ring/Rahmen (-Stempel) |
| 50 | Werkzeugteil | | |
| 51 | Gitter | 164.5 | Ring/Rahmen (-Stempel) |
| 51.1 | Gitter | | |
| 51.2 | Gitter | 164.6 | Ring/Rahmen (-Stempel) |
| 56 | kleines Flächenträgheitsmoment | | |
| | | 220 | Luftschallabsorptionsformteil |
| 57 | großes Flächenträgheitsmoment | | |
| 58 | Dickenrichtung | | |
| 60 | Presswerkzeug (Einzelwerkzeug) | | |
| 61 | Patrize (Oberwerkzeug) | | |
| 62 | Matrize (Unterwerkzeug) | | |
| 63 | Kreuz (-Stempel) | | |
| 64 | Ring/Rahmen (-Stempel) | | |
| 120 | Luftschallabsorptionsformteil | | |
| 160 | Presswerkzeug (Mehrfachwerkzeug) | | |
| 161 | Patrize (Oberwerkzeug) | | |
| 162 | Matrize (Unterwerkzeug) | | |
| 163 | Kreuz (-Stempel) | | |

## Patentansprüche

1. Luftschallabsorptionsformteil (120, 220), insbesondere zur Schallisolation eines Aggregates, einer Maschine, eines Motors (22), eines Getriebes (23) oder einer Pumpe, vorzugsweise für ein Kraftfahrzeug (24), das eine Faserschicht (25.2) aus Fasermaterial (26.2) aufweist, die mit einem duroplastischen Bindemittel versetzt ist, das unter Ausbildung eines duroplastisch gebundenen Faserschichtverbunds (27) ausgehärtet ist, **dadurch gekennzeichnet,**
**dass** die Faserschicht (25.2) des Faserschichtverbunds (27) unterschiedlich stark verdichtete und verfestigte Bereiche aus gitter- bzw. netzartige Versteifungsstrukturen (30.3; 30.4, 30.5) ausbildenden, aus durch Verformen verdichtetem und verfestigtem Fasermaterial (26.2.1) bestehenden Versteifungsstegen (31.3, 31.4) und aus mehreren, von den Versteifungsstegen (31.3, 31.4) wenigstens teilweise, vorzugsweise vollumfänglich, begrenzten bzw. umschlossenen luftschallabsorbierenden Kissen (34; 34.3. 34.4) aus dem nicht oder weniger stark verdichteten und dem nicht oder weniger stark verfestigten Fasermaterial (26.2.2) aufweist, wobei die Kissen (34; 34.3, 34.4) auf beiden Seiten (44, 45) des Luftschallabsorptionsteils (120, 220) über die Oberfläche (43) der Versteifungsstege (31.3, 31.4) hoch stehen.

2. Luftschallabsorptionsformteil nach Anspruch 1, **dadurch gekennzeichnet, dass** die sich kreuzenden bzw. ineinander übergehenden Versteifungsstege (31.3, 31.4) sich über einen mehrere Kissen (34; 34.3, 34.4 der Kissen (34; 34.3, 34.4) enthaltenden Flächenbereich des Luftschallabsorptionsformteils (20), vorzugsweise über die gesamte Breite (35) und/oder Tiefe (36) des Luftschallabsorptionsformteils (20), ununterbrochen durchgehend entlang der Kissen (34; 34.3, 34.4)erstrecken.

3. Luftschallabsorptionsformteil nach Anspruch 1 oder 2, **dadurch gekennzeichnet, dass** die Kissen (34; 34.3, 34.4) jeweils mit mehreckigen, insbesondere viereckigen, vorzugsweise rechteckigen und/oder quadratischen Versteifungsstrukturen (30.2; 30.2.1, 30.2.2) und/oder mit ovalen und/oder mit kreisförmigen Versteifungsstrukturen begrenzt ist bzw. sind.

4. Luftschallabsorptionsformteil nach einem der vorstehenden Ansprüche, **dadurch gekennzeichnet, dass** die mit dem duroplastischen Bindemittel versetzte Faserschicht (25.1; 25.2) ein Flächengewicht von 0,5 bis 10 kg/m² aufweist.

5. Luftschallabsorptionsformteil nach einem der vorstehenden Ansprüche, **dadurch gekennzeichnet, dass** die Faserschicht (25.1; 25.2) aus oder mit Baumwolle, insbesondere aus Reißbaumwolle, vorzugsweise aus oder mit Baumwollmischgewebe gebildet ist.

6. Luftschallabsorptionsformteil nach einem der vorstehenden Ansprüche, **dadurch gekennzeichnet, dass** die Versteifungsstege (31.3, 31.4) eine Stegdicke von 1 mm bis 25 mm aufweisen und dass die Kissen (34; 34.3, 34.4) eine Kissendicke (42) von 2 mm bis 100 mm aufweisen.

7. Luftschallabsorptionsformteil nach einem der vorstehenden Ansprüche, **dadurch gekennzeichnet, dass** die Versteifungsstege (31.3, 31.4) eine Stegdicke (41) aufweisen und dass die Kissen (34; 34.3, 34.4) eine Kissendicke (42) aufweisen, wobei die Stegdicke (41) kleiner ist als die Kissendicke (42).

8. Luftschallabsorptionsformteil nach einem der vorstehenden Ansprüche, **dadurch gekennzeichnet, dass** ein erster, ein Kissen (34.3) begrenzender Versteifungssteg (31.3) gegenüber einem zweiten, dasselbe Kissen (34.3) begrenzenden Versteifungssteg (31.4) in der Höhe versetzt, insbesondere oberhalb oder unterhalb des zweiten Versteifungssteges (31.4), angeordnet ist.

9. Luftschallabsorptionsformteil nach einem der vorstehenden Ansprüche, **dadurch gekennzeichnet, dass** wenigstens ein durch mehrere Versteifungsstege (31.4) vollumfänglich begrenztes bzw. umschlossenes Kissen (34) der Kissen (34; 34.3, 34.4) über wenigstens einen weiteren Versteifungssteg (31.3), vorzugsweise über wenigstens zwei sich, insbesondere rechtwinklig, kreuzende Verstärkungsstege (31.3), der bzw. die jeweils durch wenigstens einen Kissenteil (34.4), vorzugsweise durch zwei Kissenteile (34.4, 34.4), des Kissens (34) von den dieses Kissen (34) vollumfänglich begrenzenden bzw. umschließenden Versteifungsstegen (31.4) beabstandet angeordnet ist bzw. sind, in wenigstens zwei Kissenteile bzw. Teilkissen oder Kissen (34.3, 34.3) unterteilt ist.

10. Verfahren zur Herstellung eines Luftschallabsorptionsformteils (120, 220), insbesondere zur Schallisolation eines Aggregates, einer Maschine, eines Motors (22), eines Getriebes (23) oder einer Pumpe, vorzugsweise für ein Kraftfahrzeug (24), wobei eine Faserschicht (25.1) aus Fasermaterial (26.1) mit einem duroplastischen Bindemittel versetzt ist bzw. wird, das, vorzugsweise unter Einwirkung von erhöhten Temperaturen, unter Ausbildung eines duroplastisch gebundenen Faserschichtverbunds (27) ausgehärtet wird,
**dadurch gekennzeichnet,**
**dass** unterschiedlich stark verdichtete und verfestigte Bereiche der Faserschicht (25.1) dadurch hergestellt werden, dass das Fasermaterial (26.1) der Faserschicht unter Ausbildung von gitter- bzw. netzartige Strukturen bildenden Stegen durch Verformen verdichtet wird, wobei bzw. wodurch mehrere Kissen aus dem nicht oder weniger stark verdichteten Fasermaterial gebildet werden, die von den Stegen begrenzt sind, und dass das duroplastische Bindemittel während und/oder nach der Verformung bzw. Verdichtung des Fasermaterials (25.1) ausgehärtet wird, so dass im ausgehärteten Zustand gitter- bzw. netzartige Versteifungsstrukturen (30.3; 30.4, 30.5) bildende Versteifungsstege (31.3, 31.4) aus dem verdichteten und verfestigtem Fasermaterial (26.2.1) ausgebildet sind, welche die luftschallabsorbierenden Kissen (34; 34.3, 34.4) aus dem nicht oder weniger stark verdichteten und dem nicht oder weniger stark verfestigten Fasermaterial (26.2.2) wenigstens teilweise, vorzugsweise vollumfänglich, begrenzen bzw. umschließen, wobei die Kissen (34; 34.3, 34.4) auf beiden Seiten (44, 45) des Luftschallabsorptionsteils (120, 220) über die Oberfläche (43) der Versteifungsstege (31.3, 31.4) hoch stehen.

11. Verfahren zur Herstellung eines Luftschalläbsorptionsformteils nach Anspruch 10, **dadurch gekennzeichnet, dass** die Versteifungsstrukturen (30.3, 30.4) bzw. die Versteifungsstege (31.3, 31.4) durch Pressen oder durch Tiefziehen hergestellt werden.

12. Verfahren zur Herstellung eines Luftschallabsorptionsformteils nach Anspruch 10 oder 11, **dadurch gekennzeichnet, dass** die Versteifungsstrukturen (30.3, 30.4) bzw. die Versteifungsstege (31.3, 31.4) durch Verformen eines plattenförmigen Halbzeugs (25.1) hergestellt werden.

## Claims

1. Airborne sound absorption moulded part (120, 122), particularly for sound insulation of a unit, a machine, a motor (22), a transmission (23) or a pump, preferably for a motor vehicle (24), which comprises a fibre layer (25.2) of fibrous material (26.2), which is mixed with a thermosetting binder, which is hardened to form a fibre layer composite (27) bonded by thermosetting, **characterised in that** the fibre layer (25.2) of the fibre layer composite (27) comprises regions, which are compacted to different degrees and solidified, of stiffening webs (31.4), which form grid-like or reticular stiffening structures (30.3; 30.4, 30.5) and which consist of fibre material (26.2.1) compacted by deforming and solidified, and of a plurality of airborne sound absorbing pads (34; 34.3, 34.4), which are bounded or enclosed at least partly, preferably around the whole circumference, by the stiffening webs (31.3, 31.4), of the non-compacted or less strongly compacted and the non-solidified or less strongly solidified fibrous material (26.2.2), wherein the pads (34, 34.3, 34.4) on both sides (44, 45) of the airborne sound absorption part (120, 220) are elevated above the surface (43) of the stiffening webs (31.3, 31.4).

2. Airborne sound absorption moulded part according to claim 1, **characterised in that** the stiffening webs (31.3, 31.4), which intersect or go over into one another, extend over an area region, which includes several pads (34; 34.3, 34.4) of the pads (34; 34.3, 34.4), of the airborne sound absorption moulded part (20), preferably over the entire width (35) and/or depth (36) of the airborne sound absorption moulded part (20), without interruption continuously along the pads (34; 34.3, 34.4).

3. Airborne sound absorption moulded part according to claim 1 or 2, **characterised in that** the pads (34; 34.3, 34.4) are bounded by polygonal, particularly quadrilateral, preferably rectangular and/or square, stiffening structures (30.2; 30.2.1, 30.2.2) and/or by oval and/or circular stiffening structures.

4. Airborne sound absorption moulded part according to any one of the preceding claims, **characterised in that** the fibre layer (25.1; 25.2) mixed with the thermosetting binder has an area weight of 0.5 to 10 kg/m².

5. Airborne sound absorption moulded part according to any one of the preceding claims, **characterised in that** the fibre layer (25.2; 25.2) is formed from or with cotton, particularly from reprocessed cotton, preferably of or with cotton mixed textile.

6. Airborne sound absorption moulded part according to any one of the preceding claims, **characterised in that** the stiffening webs (31.3, 31.4) have a web thickness of 1 mm to 25 mm and that the pads (34; 34.3, 34.4) have a pad thickness (42) of 2 mm to 100 mm.

7. Airborne sound absorption moulded part according to any one of the preceding claims, **characterised in that** the stiffening webs (31.3, 31.4) have a web thickness (41) and that the pads (34; 34.3, 34.4) have a pad thickness (42), wherein the web thickness (41) is smaller than the pad thickness (42).

8. Airborne sound absorption moulded part according to any one of the preceding claims, **characterised in that** a first stiffening web (31.3) bounding a pad (34.3) is offset in height relative to a second stiffening web (31.4) bounding the same pad (34.3), particularly above or below the second stiffening web (31.4).

9. Airborne sound absorption moulded part according to any one of the preceding claims, **characterised in that** at least one pad (34), which is bounded or enclosed over the whole circumference by a plurality of stiffening webs (31.4), of the pads (34; 34.3, 34.4) is subdivided into at least two pad parts or part-pads or pads (34; 34.3, 34.4) by way of at least one further stiffening web (31.3), preferably by way of at least two reinforcing webs (31.3) intersecting particularly at right angles, which web or webs is or are arranged to be spaced by at least one pad part (34.4), preferably by two pad parts (34.4, 34.4), of the pad (34) from the stiffening webs (31.4) bounding or enclosing this pad (34) over the whole circumference.

10. Method of producing an airborne sound absorption moulded part (120, 220), particularly for sound insulation of a unit, a machine, a motor (22), a transmission (23) or a pump, preferably for a motor vehicle (24), wherein a fibre layer (25.1) of fibrous material (26.1) is mixed with a thermosetting binder, which is hardened preferably under the action of elevated temperatures to form a fibre layer composite (27) bonded by thermosetting, **characterised in that** regions, which are compacted to different degrees and solidified, of the fibre layer (25.1) are produced, that the fibrous material (26.1) of the fibre layer is compacted by deformation with formation of webs forming grid-like or reticular structures, wherein or whereby a plurality of pads is formed from the non-compacted or less strongly compacted fibre material, which pads are bounded by the webs, and that the thermosetting binder is hardened during and/or after deformation or compacting of the fibrous material (25.1) so that in the hardened state stiffening webs (31.3, 31.4) which form grid-like or reticular stiffening structures (30.3; 30.4; 30.5) are formed from the compacted and solidified fibrous material (26.2.1), which bound or enclose at least partly, preferably over the whole circumference, the airborne sound absorbing pads (34; 34.3, 34.4) of the non-compacted or less strongly compacted and the non-solidified or less strongly solidified fibrous material (26.2.2), wherein the pads (34; 34.3, 34.4) on both sides (44, 45) of the airborne side absorption part (120, 220) are elevated above the surface (43) of the stiffening webs (31.3, 31.4).

11. Method of producing an airborne sound absorption moulded part according to claim 10, **characterised in that** the stiffening structures (30.3, 30.4) or the stiffening webs (31.3, 31.4) are produced by pressing or deep-drawing.

12. Method of producing an airborne sound absorption moulded part according to claim 10 or 11, **characterised in that** the stiffening structures (30.3, 30.4) or the stiffening webs (31.3, 31.4) are produced by deforming a plate-shaped semi-finished product (25.1).

## Revendications

1. Pièce moulée d'absorption des bruits aériens (120, 220), en particulier pour l'insonorisation d'un groupe, d'une machine, d'un moteur (22), d'un engrenage (23) ou d'une pompe, de préférence pour un véhicule automobile (24), laquelle comporte une couche de fibres (25.2) en fibres (26.2), qui est mélangée à un liant thermodurcissable qui est durci moyennant la formation d'un composite à couche de fibres (27) lié de manière thermodurcissable,
**caractérisée en ce que**
la couche de fibres (25.2) du composite à couche de fibres (27) comporte des zones compactées et durcies avec une force différente, formées par des nervures de renfort (31.3, 31.4) constituant des structures de renfort (30.3 ; 30.4, 30.5) en forme de grilles ou réseaux, réalisées par la déformation d'un matériau pour fibres (26.2.1) compacté et durci, et par plusieurs coussins (34 ; 34.3, 34.4) absorbant les bruits aériens, délimités ou entourés, au moins partiellement, de préférence entièrement, par les nervures de renfort (31.3, 31.4), et réalisés dans le matériau pour fibres (26.2.2) non compacté ou moins fortement compacté et non durci ou moins fortement durci, lesdits coussins (34 ; 34.3, 34.4) étant disposés sur les deux côtés (44, 45) de la pièce moulée d'absorption des bruits aériens (120, 220) verticalement au-dessus de la surface (43) des nervures de renfort (31.3, 31.4).

2. Pièce moulée d'absorption des bruits aériens selon la revendication 1, **caractérisée en ce que** les nervures de renfort (31.3, 31.4), qui se croisent et se prolongent les unes dans les autres, s'étendent sur une zone de surface de la pièce moulée d'absorption des bruits aériens (20), contenant plusieurs coussins (34 ; 34.3, 34.4) parmi les coussins (34 ; 34.3, 34.4), de préférence sur toute la largeur (35) et/ou profondeur (36) de la pièce moulée d'absorption des bruits aériens (20), sans interruption en continu le long des coussins (34 ; 34.3, 34.4).

3. Pièce moulée d'absorption des bruits aériens selon la revendication 1 ou 2, **caractérisée en ce que** les coussins (34 ; 34.3, 34.4) sont délimités chacun par des structures de renfort (30.2 ; 30.2.1, 30.2.2) polygonales, en particulier quadrangulaires, de préférence rectangulaires et/ou carrées, et par des structures de renfort ovales et/ou par des structures de renfort circulaires, ou sont de telles structures de renfort.

4. Pièce moulée d'absorption des bruits aériens selon l'une quelconque des revendications précédentes, **caractérisée en ce que** la couche de fibres (25.1 ; 25.2) mélangée au liant thermodurcissable présente un grammage de 0,5 à 10 kg/m².

5. Pièce moulée d'absorption des bruits aériens selon l'une quelconque des revendications précédentes, **caractérisée en ce que** la couche de fibres (25.1 ; 25.2) est formée de coton ou est en coton, en particulier en coton effiloché, de préférence est formée en ou avec un tissu de coton mélangé.

6. Pièce moulée d'absorption des bruits aériens selon l'une quelconque des revendications précédentes, **caractérisée en ce que** les nervures de renfort (31.3, 31.4) ont une épaisseur de 1 mm à 25 mm, et **en ce que** les coussins (34 ; 34.3, 34.4) ont une épaisseur (42) de 2 mm à 100 mm.

7. Pièce moulée d'absorption des bruits aériens selon l'une quelconque des revendications précédentes, **caractérisée en ce que** les nervures de renfort (31.3, 31.4) ont une épaisseur (41) et **en ce que** les coussins (34 ; 34.3, 34.4) ont une épaisseur (42), l'épaisseur (41) des nervures étant inférieure à l'épaisseur (42) des coussins.

8. Pièce moulée d'absorption des bruits aériens selon l'une quelconque des revendications précédentes, **caractérisée en ce qu'**une première nervure de renfort (31.3), délimitant un coussin (34.3), est disposée par rapport à une deuxième nervure de renfort (31.4), délimitant le même coussin (34.3), en étant décalée en hauteur, en particulier au-dessus ou au-dessous de la deuxième nervure de renfort (31.4).

9. Pièce moulée d'absorption des bruits aériens selon l'une quelconque des revendications précédentes, **caractérisée en ce qu'**au moins un coussin (34) parmi les coussins (34 ; 34.3, 34.4), délimité ou entouré entièrement par plusieurs nervures de renfort (31.4), est divisé en au moins deux parties de coussin ou coussins partiels ou coussins (34.3, 34.3) par l'intermédiaire d'au moins une autre nervure de renfort (31.3), de préférence par l'intermédiaire d'au moins deux nervures de renfort (31.3) qui se croisent, en particulier à angle droit, laquelle ou lesquelles, par l'intermédiaire d'au moins une partie de coussin (34.4), de préférence par deux parties (34.4, 34.4) du coussin (34), est ou sont disposée(s) à distance des nervures de renfort (31.4) délimitant ou entourant entièrement ce coussin (34.3, 34.3).

10. Procédé pour la réalisation d'une pièce moulée d'absorption des bruits aériens (120, 220), en particulier pour l'insonorisation d'un groupe, d'une machine, d'un moteur (22), d'un engrenage (23) ou d'une pompe, de préférence pour un véhicule automobile (24), dans lequel procédé une couche de fibres (25.1) en fibres (26.1) est ou sera mélangée à un liant thermodurcissable qui, de préférence sous l'effet de températures élevées, est durci moyennant la formation d'un composite à couche de fibres (27) lié de manière thermodurcissable,
**caractérisé en ce que**
des zones, compactées et durcies avec une force différente, de la couche de fibres (25.1) sont réalisées par le fait que le matériau pour fibres (26.1) de la couche de fibres est compacté par déformation moyennant la formation de nervures formant des structures en grilles ou réseaux, moyennant quoi plusieurs coussins sont formés à partir du matériau pour fibres non compacté ou moins fortement compacté, lesquels sont délimités par les nervures, et **en ce que** le liant thermodurcissable est durci pendant et/ou après la déformation ou le compactage du matériau pour fibres (25.1), de telle sorte que, à l'état durci, les nervures de renfort (31.3, 31.4) constituant les structures de renfort (30.3 ; 30.4, 30.5) en forme de grilles ou réseaux, sont formées par le matériau pour fibres (26.2.1) compacté et durci, lesquelles nervures de renfort délimitent ou entourent au moins partiellement, de préférence entièrement, les coussins (34 ; 34.3, 34.4) absorbant les bruits aériens, constitué du matériau pour fibres (26.2.2) non compacté ou moins fortement compacté et non durci ou moins fortement durci, lesdits coussins (34 ; 34.3, 34.4) étant disposés sur les deux côtés (44, 45) de la pièce moulée d'absorption des bruits aériens (120, 220) verticalement au-dessus de la surface (43) des nervures de renfort (31.3, 31.4).

11. Procédé pour la réalisation d'une pièce moulée d'absorption des bruits aériens selon la revendication 10, **caractérisé en ce que** les structures de renfort (30.3, 30.4), plus précisément les nervures de renfort (31.3, 31.4) sont réalisées par pressage ou emboutissage profond.

12. Procédé pour la réalisation d'une pièce moulée d'absorption des bruits aériens selon la revendication 10 ou 11, **caractérisé en ce que** les structures de renfort (30.3, 30.4), plus précisément les nervures de renfort (31.3, 31.4) sont réalisées par déformation d'un demi-produit (25.1) en forme de plaque.
